# EUROPÄISCHE PATENTSCHRIFT

(11) **EP 4 094 191 B1**
(45) Veröffentlichungstag und Bekanntmachung des Hinweises auf die Patenterteilung: **08.01.2025**
(21) Anmeldenummer: 21700934.9
(22) Anmeldetag: 19.01.2021
(51) Int. Cl.: G06K 19/067, G06K 19/07, G06K 7/10

(54) **UWB-TOKEN**
UWB TOKEN
JETON À BANDE ULTRA-LARGE

(30) Priorität: 24.01.2020 DE 102020101731
(43) Veröffentlichungstag der Anmeldung: 30.11.2022
(73) Patentinhaber: Bundesdruckerei GmbH, 10969 Berlin (DE)
(72) Erfinder: DRESSEL, Olaf, 14641 Wustermark (DE); SCHMIDT, Sandra, 10117 Berlin (DE); KOMAROV, Ilya, 13507 Berlin (DE); TIETKE, Markus, 12439 Berlin (DE); FISCHER, Jörg, 10317 Berlin (DE)
(74) Vertreter: Richardt Patentanwälte PartG mbB
(86) Internationale Anmeldenummer: PCT/EP2021/051019
(87) Internationale Veröffentlichungsnummer: WO 2021/148381

(56) Entgegenhaltungen:
- CN-A- 105 956 645
- US-A1- 2014 354 414
- US-A1- 2015 199 602

## Beschreibung

Die Erfindung betrifft ein UWB-Token, ein UWB-Überwachungssystem sowie ein Verfahren zum Steuern eines UWB-Überwachungssystems.

Überwachungssystem bedienen sich moderner Sensorik zum Erfassen detaillierter, vielfältiger und umfangreicher Daten zu Überwachungszwecken, beispielsweise von räumlichen Bereichen. Für eine Überwachung von Zugängen zu Gebäuden werden beispielsweise Zugangskarten bzw. Schlüsselkarten verwendet. Individuelle Zugangskarten bzw. Schlüsselkarten sind anhand von Karten-IDs und/oder kryptographischen Schlüsseln, welche den Karten zugeordnet sind, unterscheidbar. Da es sich bei solchen Karten-ID ebenso wie bei kryptographischen Schlüsseln um reine Datenwerte handelt, können diese (sobald sie einmal bekannt sind) auf eine andere Karte übertragen werden.

Aus einem solchen Datenkopiervorgang resultierende Klone können zu Täuschungs- und/oder Manipulationszwecken verwendet werden.

US 2014/354414 A1 beschreibt ein Verfahren zum Lesen eines RFID-Tags, das ein Empfangen eines Signals von dem Tag, das einen strukturellen Modus und einen Antennenmodus umfasst, und ein selektives Analysieren einer Zeitdauer des empfangenen Signals, die Antennenmodus entspricht.

US 2015/199602 A1 beschreibt Radio-Frequency Identification (RFID-)Tags, die eine eindeutige Radarsignatur durch passive Reflexion eines elektromagnetischen Signals erzeugen. Insbesondere werden frequenz-, phasen- und/oder amplitudenverschiebungscodierte RFID-Tags beschrieben.

CN 105 956 645 A beschreibt ein elektronisches Etikett ohne einen Chip, der ein doppelseitiges dielektrisches Substrat verwendet. Das elektronische Etikett umfasst eine obere leitende Musterschicht, eine mittlere dielektrische Schicht und eine untere Leitermasse. Die leitende Musterschicht ist aus sechs rechteckigen komplementären offenen resonanten Mikrostreifenschleifen, die unterschiedliche Größen aufweisen, und einer charakteristischen 50-Ohm Impedanzsignalübertragungsmikrostreifenleitung zusammengesetzt. Die sechs rechteckigen komplementären offenen resonanten Mikrostreifenschleifen unterschiedlicher Größe bilden einen 6-Bit-Codierresonanzkreis auf einer dielektrischen Platte. Verschiedene Codekombinationen können realisiert werden durch Ändern der Größe der verschiedenen rechteckigen komplementären offenen resonanten Mikrostreifenschleifen, Einstellen der Resonanzfrequenz der entsprechenden rechteckigen komplementären offenen resonanten Mikrostreifenschleifen und Erhöhen oder Entfernen der rechteckigen komplementären offenen resonanten Mikrostreifenschleifen.

Der Erfindung liegt die Aufgabe zugrunde, einen Token mit einer verbesserten Identitätszuordnung zu schaffen.

Die der Erfindung zugrunde liegende Aufgabe wird jeweils mit den Merkmalen der unabhängigen Patentansprüche gelöst. Ausführungsformen der Erfindung sind in den abhängigen Patentansprüchen angegeben.

Ausführungsformen umfassen ein UWB-Token, welches eine UWB-Antenne zum Senden und Empfangen von UWB-Signalen umfasst. Die UWB-Antenne umfasst eine Mehrzahl von leitfähigen Antennenstrukturen. Die Antennenstrukturen weisen eine geometrische Kodierung mit einem das UWB-Token identifizierenden individuellen Resonanzmuster auf. Ausführungsformen können den Vorteil haben, dass das UWB-Token anhand seines Resonanzmuster identifizierbar ist, bei welchem es sich um ein Hardwaremerkmal handelt. Ein solches Hardwaremerkmal erschwert ein einfaches Klonen des UWB-Tokens mittels Kopierens von Identifizierungsdaten.

Nach Ausführungsformen wird beispielsweise ein UWB-Kommunikationskanal zwischen dem UWB-Token und ein oder mehreren UWB-Kommunikationsgeräten, z.B. UWB-Sensoren, aufgebaut. Bei einer Kommunikation zwischen dem UWB-Token und den ein/oder mehreren UWB-Kommunikationsgeräten werden von den UWB-Kommunikationsgeräten UWB-Signale des UWB-Tokens empfangen. Diese Signale können ausgemessen und das zugrundeliegende Resonanzmuster referenziert werden, um das UWB-Token anhand individuellen Resonanzmuster der Antennenstrukturen zu identifizieren. Beispielsweise werden ein oder mehrere Referenzresonanzmuster bereitgestellt. Das ermittelte Resonanzmuster des UWB-Tokens wird mit den ein oder mehreren Referenzresonanzmuster verglichen. Falls eine Abweichung des ermittelten Resonanzmusters von einem der Referenzresonanzmuster beispielsweise einen vordefinierten Schwellenwert unterschreitet, wird das ermittelte Resonanzmuster als das entsprechende Referenzresonanzmuster identifiziert und das UWB-Token wird als ein UWB-Token identifiziert, welchem bzw. dessen Token-ID das Referenzresonanzmuster zugeordnet ist.

Nach Ausführungsformen sind die Antennenstrukturen für das UWB-Token individuell aufeinander abgestimmt, sodass sich die von den Antennenstrukturen gesendeten elektromagnetischen Wellen sich überlagern und ein das UWB-Token identifizierendes individuelles Resonanzmuster aufweisen. Je nach Komplexität der Konfiguration und gegenseitigen Abstimmung der Antennenstrukturen erfordert ein Klonen einen erheblichen Versuchsaufwand oder ein zerlegenden des zu klonenden UWB-Tokens. Bei Hardwaremerkmal ist im Gegensatz zu Identifizierungsdaten ein einfaches Auslesen der entsprechenden Daten möglich. Insbesondere sind keine Phishing-Angriffe möglich, bei welchen entsprechende Identifizierungsdaten unter Vorspiegelung falscher Tatsachen von dem Nutzer abgefragt werden. Zudem ist es wesentlich schwieriger und aufwendiger sich direkten physischen Zugang zu dem UWB-Token zu verschaffen, als Identifizierungsdaten, beispielsweise digital, abzufragen. Ein Zugang zu den Hardwaremerkmalen wäre beispielsweise nur möglich, falls der Nutzer das UWB-Token aus der Hand gibt oder ihm dieses entwendet wird.

Nach Ausführungsformen umfassen die leitfähigen Antennenstrukturen streifenförmige und/oder flächige Antennenelemente. Ausführungsformen können den Vorteil haben, dass durch geometrische Ausgestaltung der streifenförmige und/oder flächige Antennenelemente eine Vielzahl unterschiedlicher Resonanzmuster realisiert werden können, welche zur Individualisierung einer Vielzahl von UWB-Token verwendet werden können.

Nach Ausführungsformen umfassen die Antennenstrukturen eine Mehrzahl von aufeinander abgestimmte Einzelantennen, welche eine Patch-Antenne bilden. Ausführungsformen können den Vorteil haben, dass eine Patch-Antenne besonders platzsparend und flach ausgestaltet werden kann und beispielsweise gut zur Integration auf Leiterplatten geeignet ist. Die Patch-Antenne kann beispielsweise aus Metallflächen, etwa rechteckigen Metallflächen besteht, deren Längsseite einer Länge von λ/2 entspricht. Damit wirkt die Metallfläche als Resonator, ähnlich wie bei Dipolantennen. Eine Patch-Antenne kann eine Richtwirkung aufweisen. Beispielsweise kann die Patch-Antenne zur Signalverstärkung mit einem Reflektor, etwa in Form eines Metallfläche, kombiniert werden. Der Reflektor ist beispielsweise hinter der Patch-Antenne angeordnet.

Nach Ausführungsformen können die Einzelantennen beispielsweise als Schleife ausgestaltet sein zur induktiven Antennenkopplung, als Fläche zu kapazitiven Antennenkopplung und/oder als Antennenstumpf, Rundstrahler, Draht etc. zur Antennenkopplung unter Verwendung eines E-Feldes.

UWB ("Ultra Wideband") bezeichnet eine drahtlose Übertragung elektromagnetischer impulsförmiger Signale über eine Mehrzahl paralleler Funkkanäle mit kleiner Sendeleistungen, z.B. bis maximal 1 mW. Hierbei werden beispielsweise Frequenzbereiche mit einer Bandbreite von mindestens 500 MHz und/oder von mindestens 20 % des arithmetischen Mittelwertes von unterer und oberer Grenzfrequenz des genutzten Frequenzbandes verwendet.

UWB basiert auf einer Erzeugung von Impulsen mit einer möglichst kurzen Pulsdauer, weshalb das über UWB-Antenne abgestrahlt bzw. empfangen Spektrum entsprechend den Gesetzen der Fourier-Transformation umso größer bzw. breiter ist, je kürzer die Pulsdauer ist.

Dabei ist das Produkt aus zeitlicher und spektraler Breite des Impulses konstant. Die gesamte Sendeleistung von wenigen Milliwatt oder weniger wird auf einen so großen Frequenzbereich verteilt, dass für den Funkbetrieb schmalbandiger Übertragungsverfahren keine Störungen zu erwarten sind. Mithin ist es nicht oder nur schwer erkennbar, dass überhaupt eine Übertragung mit UWB stattfindet. Für einen schmalbandigen Empfänger erscheint ein UWB-Signal vielmehr wie ein Rauschen. Mithin wird eine kaum ortbare Kommunikation ermöglicht, welche im gleichen Frequenzbereich wie herkömmliche Übertragungsverfahren eingesetzt werden kann.

UWB verwendet keine feste Trägerfrequenz, welche moduliert wird. Eine Datenübertragung erfolgt vielmehr beispielsweise basierend auf einer Pulsphasenmodulation bzw. Pulspositionsmodulation ("Pulse-Position Modulation"/PPM) unter Verwendung einer Mehrzahl von Einzelimpulsen. Weitere Möglichkeit zur Datenübertragung mittels UWB bietet eine Modulation von Polarität und/oder Amplitude der Impulse. Falls sich die Zeitpunkte der Einzelimpulse ausreichend unterscheiden, können mehrere UWB-Übertragungskanäle im gleichen Raumgebiet ohne gegenseitige Störung betrieben werden.

Mit zunehmender Bandbreite steigt die Übertragungskapazität, womit UWB-Systeme beispielsweise Nutzbitraten bis hin zum GBit/s-Bereich bereitstellen können. Reichweiten von UWB-Übertragungen können beispielsweise im Bereich von einigen wenigen Metern bis hin zu hundert Metern liegen.

Die UWB-Technologie ermöglicht zudem ein Implementieren eines Radarverfahrens unter Verwendung von UWB-Radarsensoren. Dabei wird, wie bei der UWB-Datenübertragung, ein elektromagnetisches Wechselfeld großer Bandbreite generiert, dessen Feldstärken klein sind. Je nach Beschaffenheit von Objekten im Ausbreitungsbereich des elektromagnetischen Wechselfeldes, wird dies das Wechselfeld deformieren. Das resultierende Feld kann von einem UWB-Sensor erfasst werden. Bei Kenntnis sowohl des Ausgangsfeldes als auch das resultierenden Feldes kennt, kann auf die Ursache der erfassten Deformation und mithin auf die Art und Geometrie des oder der Objekte im Ausbreitungsbereich des elektromagnetischen Wechselfeldes geschlossen werden.

UWB-Radarsensoren arbeiten beispielsweise auf Frequenzen zwischen 30 MHz und 12,4 GHz. Je nach Anwendung können beispielsweise Auflösungen von Zentimetern bis hin zu einigen Millimetern bei Arbeitsbandbreiten von 5 GHz erreicht werden.

Bei einem Radarverfahren werden kurze Impulse ausgesandt und mit den von dem oder den Objekten reflektierten Impulsverläufen verglichen. Damit lassen sich geometrische Größen wie beispielsweise Abstand, Dicke, Länge, Position, Körperform, Bewegung und/oder Geschwindigkeit bestimmen. Auch können Gegenstände durch Kleidung und Wände hindurch, detektiert werden. Hierbei werden die Eigenschaften des Ausbreitungsmediums für die elektromagnetischen Felder als bekannt vorausgesetzt.

UWB kann ein Tracking von mobilen Geräten verhindern, da über UWB kommunizierende Geräte, wie etwa UWB-Token, ohne Kenntnis der verwendeten UWB-Kodierung nicht lokalisierbar sind. Ferner stellt die verhältnismäßig kurze Reichweite von UWB sicher, dass ein Tracking und/oder Abhören aus der Ferne effektiv unterbunden werden kann. Zudem bietet die UWB-Kodierung eine eigenständige, instantane Verschlüsselung der übertragenen Daten, welche damit gegen ein Abhören abgesichert werden. Darüber hinaus weist UWB aufgrund des breiten Frequenzbandes eine hohe Resistenz gegenüber Störsignalen ("Jamming") auf. Aufgrund dieser speziellen, für Sicherheitsapplikationen vorteilhafter technischer Eigenschaften, kann unter Verwendung von UWB ein Überwachungssystem implementiert werden, welches einen hohen Schutz der Prozesse als auch der darin befindlichen bzw. verwendeten Sensordaten, insbesondere aber auch im Zusammenhang mit personenbezogenen Sensordaten von Beteiligten, gewährleisten kann. Insbesondere kann eine hohe Sicherheit der Datenübertragung mittels UWB sichergestellt werden.

Da die UWB-Technik auch höhere Datenraten zulässt, kann es insbesondere vorteilhaft für eine Übertragung von Sensordaten in Form von Videodaten, Tondaten und oder anderen umfangreichen sensorischen Messwerten sein.

Unter einem UWB-Token wird ein Hardwaretoken in Form eines mobilen tragbaren elektronischen Geräts verstanden, welches zu einer kabellosen Kommunikation mittels UWB konfiguriert ist. Ein UWB-Token kann zudem zu einer Bestimmung von Positionsdaten anhand einer Laufzeitmessung und Triangulation von UWB-Signalen konfiguriert sein, welche es von Lokalisierungssensoren des UWB-Überwachungssystems empfängt. Beispielsweise kann das UWB-Token als ein Dokument ausgestaltet bzw. in ein Dokument integriert sein, insbesondere ein Wert- oder Sicherheitsdokument. Unter einem "Dokument" werden papierbasierte und/oder kunststoffbasierte Dokumente verstanden, wie zum Beispiel elektronische Ausweisdokumente, insbesondere Reisepässe, Personalausweise, Visa sowie Führerscheine, Fahrzeug-scheine, Fahrzeugbriefe, Firmenausweise, Gesundheitskarten oder andere ID-Dokumente sowie auch Chipkarten, Zahlungsmittel, insbesondere Banknoten, Banckarten und Kreditkarten, Frachtbriefe oder sonstige Berechtigungsnachweise. In einem Speicher eines solchen Dokuments sind beispielsweise ein oder mehrere Attribute eines dem Dokument zugeordneten Nutzers oder Gegenstands gespeichert.

Unter einem UWB-Sensor wird ein Sensor oder Anker verstanden, welcher zum Übertragen von erfassten Daten, z.B. Sensordaten, mittels UWB konfiguriert ist. Ferner kann ein UWB-Sensor, wie beispielsweise ein UWB-Radarsensor oder ein UWB-Lokalisierungssensor, dazu konfiguriert Sensordaten mittels UWB zu erfassen. Alternative kann ein UWB-Sensor dazu konfiguriert die Sensordaten mittels eines UWB-unabhängigen Verfahrens, etwa einem optischen, akustischen, chemischen, thermischen, elektromagnetischen und/oder vibrationsbasierten Verfahren. Nach Ausführungsformen sind die UWB-Sensoren für eine Datenübertragung ausschließlich mittels UWB konfiguriert. Nach Ausführungsformen können ein oder mehrere der UWB-Sensoren zusätzlich zum Übertragen von erfassten Daten mittels einer kabelgebundenen Datenverbindung konfiguriert sein. Nach Ausführungsformen ist ein Teil der UWB-Sensoren des UWB-Überwachungssystems zum Übertragen von erfassten Daten mittels einer kabelgebundenen Datenverbindung konfiguriert. Nach Ausführungsformen sind alle der UWB-Sensoren des UWB-Überwachungssystems zum Übertragen von erfassten Daten mittels einer kabelgebundenen Datenverbindung konfiguriert.

Unter Sensordaten werden mittels eines der UWB-Sensoren erfasste Daten verstanden, d.h. beispielsweise optische, akustische, chemische, thermische, elektromagnetische und/oder vibrationsbasierte Daten. Die Sensordaten werden von den erfassenden UWB-Sensoren innerhalb des UWB-Überwachungssystems mittels UWB übertragen. Nach Ausführungsformen können ein oder mehrere der UWB-Sensoren zusätzlich zum Übertragen von erfassten Daten mittels einer kabelgebundenen Datenverbindung konfiguriert sein. Bei den Sensordaten kann es sich ferner um Daten handeln, welche von den UWB-Sensoren mittels UWB erfasst wurden. Beispielsweise handelt es sich bei den Sensordaten um Sensordaten eines UWB-Radarsensors oder eines UWB-Lokalisierungssensors.

Nach Ausführungsformen umfasst das UWB-Token ein Band, welches konfiguriert ist zum Tragen des UWB-Tokens. Ausführungsformen können den Vorteil haben, dass ein Nutzer das UWB-Token unter Verwendung des Bandes bequem am Körper, etwa um seinen Hals oder sein Handgelenk, tragen. Alternativ kann das UWB-Token unter Verwendung des Bandes an einem Kleidungsstück, einem Accessoire, einer Tasche oder einer Geldbörse befestigt und von dem Nutzer mit sich geführt werden. Ausführungsformen können den Vorteil haben, dass die Verwendung eines Bandes neben einem sicheren Tragen des UWB-Tokens im Zuge von Bewegungen des Nutzers selbst in Bewegung, insbesondere in Pendelbewegungen, versetzt werden kann, welche sowohl für Energiegewinnung, als auch für ein Authentifizieren des Nutzers genutzt werden kann.

Nach Ausführungsformen ist die UWB-Antenne zumindest teilweise in das Band integriert und zumindest ein Teil der leitfähigen Antennenstrukturen erstreckt sich entlang des Bandes, d.h. einer Längsrichtung bzw. Erstreckungsrichtung des Bandes, erstrecken. Ausführungsformen können den Vorteil haben, dass die Antennenstruktur in das Band integriert sein kann. Beispielsweise kann das gesamte UWB-Token in das Band integriert sein. Alternativ kann das UWB-Token kompakt ausgestaltet und die Antennenstruktur teilweise oder vollständig in das band integriert sein. Ausführungsformen können den Vorteil haben, dass das Band ausreichend Platz bietet für eine UWB-Antenne mit leitfähigen Antennenstrukturen, welche eine individuelle geometrische Ausgestaltung aufweisen. Je mehr Platz zur Verfügung steht, desto mehr geometrische Gestaltungsmöglichkeiten eröffnen sich.

Nach Ausführungsformen umfasst das Band ein oder mehrere Sensoren. Die Sensoren können beispielsweise einen Bewegungssensor und/oder Sensoren zur Erfassung von Vitalfunktionen eines Trägers des Bandes, wie beispielsweise Puls und/oder Atmung, umfassen. Unter Verwendung der Sensoren kann beispielsweise bestimmt werden, ob das UWB-Token getragen wird, und/oder der Träger des UWB-Tokens kann authentifiziert werden, beispielsweise unter Verwendung eines mittels der Sensoren erfassten Bewegungsmusters des UWB-Tokens beim Tragen durch den Träger, eines mittels der Sensoren erfassten Pulsmusters des Trägers und/oder eines mittels der Sensoren erfassten Atmungsmusters des Trägers.

Nach Ausführungsformen umfasst das Band eine Anzeigevorrichtung, welche beispielsweise ein Display und/oder ein oder mehrere LEDs umfasst. Die Anzeigevorrichtung kann beispielsweise ein Ergebnis einer Authentifizierung, z.B. deren Erfolg, unter Verwendung der ein oder mehreren Sensoren anzeigen. Ferner kann die Anzeigevorrichtung beispielsweise einen Ladestatus eines Energiespeichermoduls, z.B. eines Akkumulators, und/oder einen Energiegewinnungsstatus eines Energiegewinnungsmoduls des UWB-Tokens anzeigen.

UWB arbeitet beispielsweise im Bereich 3 bis 9 GHz. Eine UWB-Antenne kann mithin entsprechend klein ausgestaltet sein. Stattet man einen Nutzer mit einem Band aus, etwa ein Halsband oder Armband, so kann auf dem Band eine Mehrzahl von leitfähige Antennenstrukturen aufgebracht werden.

Nach Ausführungsformen umfasst das UWB-Token ein Energiegewinnungsmodul, welches zum Gewinnen von elektrischer Energie für einen Betrieb des UWB-Tokens durch Umwandeln kinetischer Energie in elektrische Energie konfiguriert ist. Die umgewandelte kinetische Energie umfasst beispielsweise kinetische Energie von Pendelbewegung des Bandes beim Tragen des UWB-Tokens durch einen Nutzer. Ausführungsformen können den Vorteil haben, dass eine durch das Tragen des UWB-Tokens hervorgerufene Pendelbewegung zur Energiegewinnung genutzt werden kann. Somit kann eine autarke Energieversorgung des UWB-Tokens zur Verfügung gestellt werden. Nach Ausführungsformen umfasst das UWB-Token ferner ein Energiespeicherelement zur Vorratsspeicherung der gewonnen elektrischen Energie, etwa eine Batterie bzw. einen Akkumulator. Nach Ausführungsformen kann das Energiespeicherelement ferner konfiguriert sein zu einem Aufladen bzw. Vorladen mit elektrischer Energie unter Verwendung einer externen Energiequelle, beispielsweise kabellos induktiv oder über ein Stromkabel. Ausführungsformen können den Vorteil haben, dass sichergestellt werden kann, dass dem UWB-Token auch nach einer längeren Ruhephase und/oder initial vor einem Anlegen durch den Nutzer ausreichend elektrische Energie zum Betrieb zur Verfügung steht.

Ist das UWB-Token an dem Nutzer mittels eines Bandes zu Tragen verortet, pendelt das UWB-Token beim Tragen naturgemäß Bewegungen des Nutzers, so dass Elemente des UWB-Tokens zur Energiegewinnung kinetische Energie der Pendelbewegung umwandeln und/oder Bewegungsdaten der Pendelbewegung zum Authentifizieren des Nutzers erfassen können.

Nach Ausführungsformen umfasst die umgewandelte kinetische Energie beispielsweise kinetische Energie von einem Ziehen an dem Band bzw. Entrollen des Bands und/oder einem Aufrollen des Bands. Beispielsweise ist ein Teil des Bandes auf einer Aufrollvorrichtung aufgerollt oder an dem Band ist eine Aufrollvorrichtung mit einem aufgerollten Zugband angeordnet. Durch ein Ziehen an dem Band bzw. dem Zugband wird das aufgerollte Band bzw. Zugband entrollt. Beispielsweise umfasst die Aufrollvorrichtung eine Aufrollmechanik zum Wiederaufrollen des entrollten Bands bzw. Zugbands. Die Aufrollmechanik ist beispielsweise federgetrieben, wobei etwa eine Feder beim Entrollen gespannt wird und die bei einem anschließenden Entspannen der Feder in der Feder gespeicherte Federkraft in eine mechanische Kraft zum Aufrollen des Bands bzw. Zugbands umgewandelt wird.

Nach Ausführungsformen ist das Energiegewinnungsmodul zum Umwandeln der kinetischen Energie in die elektrische Energie unter Verwendung eines elektromagnetischen, piezoelektrischen und/oder elektrostatischen Verfahrens konfiguriert. Ausführungsformen können den Vorteil haben, dass eine effiziente Gewinnung elektrischer Energie aus Pendelbewegungen des UWB-Tokens bereitgestellt wird.

Kinetische Energie kann beim Tragen des UWB-Tokens beispielsweise in Form von Schwingungen des UWB-Tokens, zufälligen Verschiebungen des UWB-Tokens und/oder auf das UWB-Token einwirkenden Kräften auftreten. Solche kinetische Energie kann beispielsweise unter Verwendung von elektromagnetischen, piezoelektrischen und/oder elektrostatischen Mechanismen in elektrische Energie umgewandelt werden.

Beispielsweise stellt das UWB-Token einen Inertialrahmen bereit, in welchem eine beweglich, beispielsweise federnd, gelagerte Inertialmasse angeordnet ist. Bewegungen bzw. Schwingungen des Inertialrahmens werden auf die Inertialmasse übertragen, wodurch eine relative Verschiebung zwischen Inertialrahmen und Inertialmasse erzeugt wird. Ferner können Dehnungen auftreten. Ein solches System verfügt über eine Resonanzfrequenz, welche beispielsweise so ausgelegt sein kann, dass sie den Frequenzen der beim Tragen des UWB-Tokens auftretenden typischen Schwingungen entspricht. Das UWB-Token kann beispielsweise für eine Mehrzahl an Resonanzfrequenzen und/oder für eine große Frequenzbandbreite konfiguriert sein.

Der Umwandlungsmechanismus zum Umwandeln der kinetischen Energie in mechanische Energie kann beispielsweise mechanische Dehnungen und/oder relative Verschiebungen innerhalb des Systems ausnutzt. Ein Dehnungseffekt nutzt eine Verformung und verwendet beispielsweise ein aktives Material, etwa ein piezoelektrisches Material, um elektrische Energie aus der Dehnung zu erzeugen. Bei einer relativen Verschiebung kann entweder die Geschwindigkeit oder Position der Verschiebung zur Energiegewinnung verwendet werden. Die Geschwindigkeit ist in der Regel mit elektromagnetischer Energieumwandlung verbunden, während die Position mit elektrostatischer Energieumwandlung verbunden ist.

Bei einer piezoelektrischen Umwandlung wird der piezoelektrische Effekt genutzt, welcher auftritt, wenn bestimmte Materialien, die mechanischer Belastung ausgesetzt sind, elektrisch polarisiert werden. Umgekehrt verformen sich diese Materialien, wenn sie einem elektrischen Feld ausgesetzt sind. Piezoelektrische Materialien sind in vielfältigen Formen bekannt und umfassen beispielsweise Einkristalle, wie etwa Quarz, Piezokeramiken, wie etwa Blei-Zirkonat-Titanat (PZT), Dünnschichten, wie etwa gesputtertes Zinkoxid, siebdruckbare Dickfilme auf Basis von Piezokeramikpulvern oder Polymermaterialien, wie etwa Polyvinylidenfluorid (PVDF). Piezoelektrische Materialien weisen allgemein anisotrope Eigenschaften auf, d.h. die Eigenschaften des Materials unterscheiden sich je nach Kraftrichtung und Ausrichtung der Polarisation und Elektroden.

Bei einer elektromagnetischen Umwandlung wird elektromagnetische Induktion genutzt, bei welcher ein elektrischer Strom in einem Leiter erzeugt wird, der sich innerhalb eines Magnetfeldes befindet. Der Leiter kann beispielsweise die Form einer Spule aufweisen. Elektrischer Strom wird in dem Leiter beispielsweise durch eine Bewegung des Leiters in dem Magnetfeld oder durch eine Änderung des Magnetfeldes erzeugt werden.

Eine elektrostatische Umwandlung verwendet eine relative Bewegung zwischen dielektrisch isolierten Elektroden, welche einen Kondensator bilden. Die Elektroden werden geladen. Eine Arbeit gegen die elektrostatische Kraft zwischen den Elektroden resultiert in geernteter elektrischer Energie.

Nach Ausführungsformen umfasst das UWB-Token einen Bewegungssensor zum Erfassen von Bewegungsdaten des Bandes beim Tragen des UWB-Tokens durch den Nutzer. Die Bewegungsdaten des Bandes umfassen Daten von Pendelbewegungen des Bandes. Das UWB-Token umfasst ferner ein Authentifizierungsmodul zum verhaltensbasierten Authentifizieren des Nutzers, der das UWB-Token trägt, unter Verwendung der erfassten Bewegungsdaten.

Umfasst das UWB-Token einen Bewegungssensor zum Erfassen von Bewegungsdaten des Bandes beim Tragen des UWB-Tokens durch den Nutzer. Die Bewegungsdaten des Bandes umfassen Daten der Pendelbewegungen des Bandes beim Tragen. Ferner umfasst das UWB-Token ein Authentifizierungsmodul zum verhaltensbasierten Authentifizieren des Nutzers, der das UWB-Token trägt, unter Verwendung der erfassten Bewegungsdaten.

Ausführungsformen können den Vorteil haben, dass aus den Bewegungen des Nutzers, welcher das UWB-Token trägt, resultierenden Bewegungen des UWB-Tokens unter Verwendung des Bewegungssensor erfasst werden können. Da diese Bewegungsdaten Bewegungen des UWB-Tokens beschreiben bzw. quantifizieren, welche auf Bewegungen des Nutzers basieren, welche für diesen charakteristisch sind, sind auch die erfassten Bewegungsdaten charakteristisch für den Nutzer und können zu dessen Authentifizierung verwendet werden. Bei erfassten Bewegungsdaten handelt es sich um Daten von Bewegungen des UWB-Tokens, welche dadurch verursacht werden, dass der Nutzer das UWB-Token mit sich führt, beispielsweise am Körper trägt. Durch die charakteristischen Bewegungen des Nutzers wird das UWB-Token in einer für den Nutzer charakteristischer Weise mitbewegt. Dies ist selbst dann der Fall, wenn der Nutzer nicht aktive mit dem UWB-Token interagiert, z.B. keine Benutzerschnittstelle des UWB-Tokens, wie etwa eine Taste, eine Tastatur, einen Touchscreen, ein Mikrophon, nutzt.

Der Bewegungssensor kann beispielsweise einen Beschleunigungssensor umfassen. Eine Bewegung kann beispielsweise durch Integration über Beschleunigungsmesswerte, welche der Beschleunigungssensor erfasst, berechnet werden. Der Bewegungssensor kann beispielsweise zudem seine Lage im Raum und/oder Veränderungen der Lage detektieren. Beispielsweise umfasst der Bewegungssensor ein Gyroskop. Bei den durch den Bewegungssensor erfassten Bewegungsdaten handelt es sich beispielsweise um Beschleunigungs-, Neigungs- und/oder Positionsdaten.

Nach Ausführungsformen umfasst das Authentifizierungsmodul ein Klassifikationsmodul, welches zum Erkennen eines oder mehrerer generischer Bewegungsmuster unter Verwendung von Bewegungsdaten konfiguriert ist. Beispielsweise ist das Klassifikationsmodul zum Erkennen der generischen Bewegungsmuster unter Verwendung von Trainingsdatensätzen mit Bewegungsdaten einer Nutzerkohorte vortrainiert. Das verhaltensbasierte Authentifizieren des Nutzers durch das UWB-Token umfasst die folgenden Schritte:
- Erfassen der Bewegungsdaten durch den Bewegungssensor des UWB-Tokens,
- Eingeben der erfassten Bewegungsdaten in das Klassifikationsmodul,
- Generieren eines Klassifikationsergebnisses durch das Klassifikationsmodul, ob der Nutzer, der das UWB-Token trägt, ein in dem UWB-Token registrierte Nutzer ist,
- Erzeugen eines Authentifizierungssignals, falls das Klassifikationsergebnis ein Prüfungskriterium erfüllt, wobei das Authentifizierungssignal eine erfolgreiche Authentifizierung des Nutzers, der das UWB-Token trägt, signalisiert.

Ausführungsformen können den Vorteil haben, dass allein durch das Mitführen des UWB-Tokens ein Authentifizieren des Nutzers ermöglicht wird. So kann sichergestellt werden kann, dass das mobile tragbare UWB-Token tatsächlich von dem zugeordneten Nutzer mit sich geführt wird. Damit kann verhindert werden, dass sich ein Nutzer zu Täuschungszwecken von seinem UWB-Token trennt, d.h. diesen beispielsweise vertauscht, liegen lässt oder einer anderen Person übergibt. Insbesondere wenn ein zentrales Verarbeiten und/oder Speichern personenbezogene Daten vermieden werden soll, ermöglicht eine Überwachung der Position von UWB-Token eine Überwachung der Aufenthaltsorte der zugeordneten Nutzer, ohne dass hierfür personenbezogene Daten des Nutzers zentral verarbeitet und/oder gespeichert werden müssten. Eine solche indirekte Überwachung der Aufenthaltsorte setzt aber eine Anwesenheit der verwendeten UWB-Token an dem jeweils zugeordneten Nutzer voraus, sodass die Position des zugeordneten Nutzers mit der Position des UWB-Tokens gleichgesetzt werden kann. Diese Übereinstimmung kann mittels der Authentifizierung sichergestellt werden. Mit anderen Worten lässt sich so die Anwesenheit des UWB-Tokens an dem zugeordneten Nutzer prüfen.

Das Prüfkriterium kann beispielsweise umfassen, dass eine ausreichen hohe Übereinstimmung zwischen den erfassten Bewegungsdaten und einem oder mehreren für den registrierten Nutzer hinterlegten Referenzwerten vorliegt. Ferner kann das Prüfkriterium umfassen, dass die erfassten Bewegungsdaten und/oder die verwendeten ein oder mehreren Referenzwerte ein maximales Alter nicht überschreiten.

Nach Ausführungsformen wird der Nutzer im Zuge einer Einlernphase als Nutzer des UWB-Tokens registriert. Nach Ausführungsformen umfasst die Einlernphase ein Erfassen von Bewegungsdaten des Nutzers durch einen Authentifizierungssensor in Form eines Bewegungssensors des UWB-Tokens und Extrahieren von ein oder mehreren für den zu registrierenden Nutzer charakteristischen Referenzwerten.

Nach Ausführungsformen können erfasste Bewegungsdaten im Falle einer erfolgreichen Authentifizierung des Nutzers zum Anpassen und/oder Verbessern der für den entsprechenden Nutzer hinterlegten Referenzwerte verwendet werden.

Nach Ausführungsformen sind die Referenzwerte in einem Speicher des UWB-Tokens gespeichert. Ausführungsformen können den Vorteil haben, dass die Referenzwerte nur lokal auf dem UWB-Token gespeichert wird und somit in der Verfügungshoheit des zugeordneten Nutzers verbleibt. Beispielsweise sind die Referenzwerte in einem in einem geschützten Speicherbereich des Speichers des mobilen tragbaren UWB-Tokens gespeichert. Unter einem "geschützten Speicherbereich" wird hier ein Bereich eines elektronischen Speichers verstanden, auf den ein Zugriff, beispielsweise ein Lesezugriff oder ein Schreibzugriff, ausschließlich über einen mit dem Speicher gekoppelten Prozessor möglich. Der mit dem Speicher gekoppelten Prozessor ermöglicht einen Zugriff auf geschützten Speicherbereich beispielsweise nur dann, wenn eine hierfür erforderliche Bedingung erfüllt ist. Bei dieser Bedingung kann es sich zum Beispiel um eine kryptografische Bedingung, insbesondere eine erfolgreiche Authentisierung und/oder eine erfolgreiche Berechtigungsprüfung, handeln. Beispielsweise ist ein Zugriff auf bestimmte kryptographische Programme und/oder Dienstanwendungen beschränkt.

Nach Ausführungsformen sind die Referenzwerte in verschlüsselter Form in dem Speicher des UWB-Tokens gespeichert. Nach Ausführungsformen werden die verschlüsselten Referenzwerte zum Validieren der erfassten Authentifizierungsdaten entschlüsselt. Nach Ausführungsformen werden die erfassten Authentifizierungsdaten verschlüsselt zum Validieren unter Verwendung der verschlüsselten Referenzwerte.

Nach Ausführungsformen ist das UWB-Token dazu konfiguriert die Schritte des Erfassens der Bewegungsdaten, des Eingebens der Bewegungsdaten und des Generierens des Klassifikationsergebnisses wiederholt nacheinander auszuführen. Das verhaltensbasierte Authentifizieren des Nutzers durch das UWB-Token umfasst ferner ein Speichern der jeweils generierten Klassifikationsergebnisse in einem Speicher des UWB-Tokens. Das Erzeugen des Authentifizierungssignals umfasst:
- auf eine Authentifizierungsanfrage hin, Zugreifen auf den Speicher des UWB-Tokens zum Auslesen des gespeicherten Klassifikationsergebnisses,
- Auslesen des Klassifikationsergebnisses aus dem Speicher des UWB-Tokens,
- Auswerten des ausgelesenen Klassifikationsergebnisses unter Verwendung des Prüfungskriteriums.

Ausführungsformen können den Vorteil haben, dass die Klassifikationsergebnisse vorgespeichert werden können und im Falle einer Authentifizierungsanfrage unmittelbar zur Verfügung stehen. Beispielsweise werden die Schritte des Erfassens der Bewegungsdaten, des Eingebens der Bewegungsdaten und des Generierens des Klassifikationsergebnisses kontinuierlich, in festgelegten Zeitintervallen oder zufällig wiederholt. Beispielsweise erfolgt eine Wiederholung in kurzen Zeitintervallen von Sekunden, z.B. 10, 20, 30, 40, 50 Sekunden, oder Minuten, z.B. 1, 2, 3, 4, 5, 10, 15, 20, 25, 30 Minuten.

Nach Ausführungsformen wird die Authentifizierung zum Überwachen der Anwesenheit des UWB-Tokens an dem zugeordneten Nutzer verwendet. Die Authentifizierungsanfrage wird beispielsweise von einem UWB-Überwachungssystem empfangen. Das Authentifizierungssignal wird beispielsweise an das UWB-Überwachungssystem in Antwort auf die Authentifizierungsanfrage gesendet. Beispielsweise erfolgt das Senden mittels UWB. Zugleich kann das UWB-Überwachungssystem dazu konfiguriert sein, eine Position des UWB-Tokens innerhalb eines von dem UWB-Überwachungssystem überwachten räumlichen Bereiches zu bestimmen. Auf das Empfangen einer Authentifizierungsbestätigung hin Form des Authentifizierungssignals kann die Position des UWB-Tokens als die Position des dem UWB-Token zugeordneten Nutzers identifiziert werden. Ausführungsformen können den Vorteil haben, dass über das UWB-Token im Falle einer erfolgreichen Validierung die Position des dem UWB-Token zugeordneten Nutzer zuverlässig bestimmen lässt.

Nach Ausführungsformen erfolgt das Senden einer Authentifizierungsanfrage an das UWB-Token in vordefinierten festen Intervallen, in zufälligen Intervallen, zufällig, auf ein Detektieren eines Ausnahmeereignisses hin, bei Erreichen bestimmter Positionen innerhalb des räumlichen Bereichs durch das UWB-Token, auf ein Erfassen eines ungewöhnlichen Verhaltens des Nutzers des UWB-Tokens. Nach Ausführungsformen erfolgt das Senden einer Authentifizierungsanfrage in Abhängigkeit von der Position des UWB-Tokens innerhalb des räumlichen Bereichs. Beispielsweise kann der räumliche Bereich in eine Mehrzahl von räumlichen Abschnitten unterteilt sein, welchen unterschiedliche Sicherheitslevel zugeordnet sind. Befindet sich die Position des UWB-Tokens beispielsweise in einem räumlichen Abschnitt mit einem höheren Sicherheitslevel können mehr Authentifizierungen imitiert werden als in einem räumlichen Abschnitt mit einem niedrigerem Sicherheitslevel. Die Erhöhung der Anzahl an Authentifizierungen kann beispielsweise implementiert werde durch ein Verkürzen der Intervalle zwischen dem Senden von Authentifizierungsanfragen, ein Erhöhen der Wahrscheinlichkeit für ein zufälliges Senden von Authentifizierungsanfragen und/oder ein Verkürzen der Abstände zwischen Positionen innerhalb des räumlichen Bereichs, bei deren Erreichen durch das UWB-Token eine Authentifizierungsanfrage gesendet wird.

Ferner kann unter Verwendung der bestimmten Positionsdaten des UWB-Tokens beispielsweise ein Bewegungsmuster des UWB-Tokens ermittelt werden. Falls dieses Bewegungsmuster Auffälligkeiten aufweist, kann eine Authentifizierungsanfrage gesendet werden. Zum Detektieren von Auffälligkeiten in Bewegungsmustern können die Bewegungsmuster einer Mehrzahl von UWB-Token als Inputdaten für ein Bewegungsmusterklassifikationsmodul mit einem Maschinenlernalgorithmus verwendet werden. Für diese Trainingsdaten kann festgelegt werden, dass es sich dabei um gewöhnliche Bewegungsmuster ohne Auffälligkeiten handelt. Werden Bewegungsmuster in das so trainierte Bewegungsmusterklassifikationsmodul als Inputdaten eingegeben, erkennt das Bewegungsmusterklassifikationsmodul falls Auffälligkeiten gegenüber Trainingsbewegungsmustern vorliegen. Als Output gibt das trainierte Bewegungsmusterklassifikationsmodul beispielsweise ein binäres Klassifikationsergebnis aus: keine Auffälligkeiten liegen vor oder eine Auffälligkeit liegen vor. Falls das Klassifikationsergebnis beispielsweise ein Vorliegen von Auffälligkeiten anzeigt, wird eine Authentifizierungsanfrage gesendet, falls das Klassifikationsergebnis beispielsweise kein Vorliegen von Auffälligkeiten anzeigt, wird keine Authentifizierungsanfrage gesendet.

In dem UWB-Token, insbesondere in dem Band, kann zudem weitere Sensorik, d.h. weitere Sensoren, zum Erfassen von Bioinformationen des Nutzers implementiert sein. Diese Bioinformationen können, beispielsweise Daten zu Körpertemperatur, Puls, Blutdruck oder Atmung des Nutzers umfassen. Dies ist insbesondere dann möglich, wenn das UWB-Token bzw. band auf der Haut des Nutzers, etwa am Hals oder Armgelenk bzw. um den Hals oder um das Armgelenk getragen wird. Anhand dieser Bioinformationen kann geprüft werden, ob das UWB-Token tatsächlich von einem Nutzer getragen wird. Ferner können diese Bioinformationen zusätzlich zur Authentifizierung des Nutzers verwendet werden. Beispielsweise umfassen die Bioinformationen Venendaten zum Authentifizieren des Nutzers anhand nutzerindividueller Eigenschaften seiner Venen.

Nach Ausführungsformen umfasst das Band ein Halteelement, welches zum Halten eines Gegenstands konfiguriert ist. Ausführungsformen können den Vorteil haben, dass das UWB-Token nicht nur zu Lokalisierungs- und Identifizierungszwecken, sondern darüber hinaus zu weiteren praktischen Anwendungen durch den Nutzer genutzt werden kann. Nach Ausführungsformen handelt es sich bei dem UWB-Token um ein Lanyard. Nach Ausführungsformen handelt es sich bei dem Halteelement um einen Karabinerhacken, Befestigungsring, oder eine Tragehülle. Ein Karabinerhacken bezeichnet einen Haken mit einem federunterstütztem Schnappverschluss zum Öffnen und Schließen des Hakens. Nach Ausführungsformen handelt es sich bei den ein oder mehreren Gegenständen beispielsweise um ein Dokument, einen Schlüssel, mobiles tragbares Kommunikationsgerät, wie etwa ein Smartphone, ein Brustbeutel.

Nach Ausführungsformen handelt es sich bei dem Band um ein Umhängeband, welches konfiguriert ist zum Tragen des UWB-Tokens um einen Hals des Nutzers. Ausführungsformen können den Vorteil haben, dass bei einem Tragen um den Hals des Nutzers dessen Hände frei bleiben, dass UWB-Token auf der Haut des Nutzers getragen werden kann und/oder Pendelbewegungen besonders ausgeprägt sein können.

Nach Ausführungsformen ist das UWB-Token in ein Dokument integriert. Bei dem Dokument, etwa einem Wert- oder Sicherheitsdokument, kann es sich beispielsweise um ein papierbasiertes und/oder kunststoffbasiertes Dokument handeln. Das Dokument kann beispielsweise als elektronisches Ausweisdokumente, insbesondere Reisepässe, Personalausweise, Visa sowie Führerscheine, Fahrzeugscheine, Fahrzeugbriefe, Firmenausweise, Gesundheitskarten oder andere ID-Dokumente sowie auch Chipkarten, Zahlungsmittel, insbesondere Banknoten, Bankkarten und Kreditkarten, Frachtbriefe oder sonstige Berechtigungsnachweise ausgestaltet sein.

Beispielsweise kann das Dokument dazu konfiguriert sein unter Verwendung eines Umhängebandes oder Lanyards um den Hals des Nutzers getragen zu werden. In diesem Fall kann das als Dokument ausgestaltete UWB-Token Pendelbewegungen, wie oben beschrieben, zum Authentifizieren des Nutzers und/oder zur Energiegewinnung nutzen, selbst wenn keinen Antennenstrukturen in dem Umhängeband oder Lanyard selbst, sondern ausschließlich in dem UWB-Token integriert sind. Beispielsweise weist das Dokument die Form einer Chipkarte auf, etwa im Format ID-1 nach ISO 7816 auf, d.h. 85,60 mm mal 53,98 mm.

Nach Ausführungsformen ist das UWB-Token in ein mobiles tragbares Kommunikationsgerät integriert. Bei dem mobilen tragbaren Kommunikationsgerät handelt es sich beispielsweise um einen Smart Device, wie etwa ein Smartphone, eine Smartwatch, Smartglasses, ein Phablet, ein Tablet, ein Smartband, eine Smartkeychain, eine Smartcard etc.

Ausführungsformen umfassen ferner ein UWB-Überwachungssystem zur Überwachung eines räumlichen Bereiches. Das UWB-Überwachungssystem umfasst eine Mehrzahl von UWB-Sensoren umfasst, welche in dem räumlichen Bereich verteilt angeordnet und zum Erfassen von Sensordaten konfiguriert sind. Die UWB-Sensoren sind ferner für eine Kommunikation mittels UWB konfiguriert. Die Mehrzahl von UWB-Sensoren umfasst ein oder mehrere UWB-Identifizierungssensoren, welche konfiguriert sind zum Identifizieren zumindest eines UWB-Tokens nach einer der voranstehenden Ausführungsformen. In einem Speicher des UWB-Überwachungssystems ist eine Mehrzahl von Referenzmustern gespeichert, welche jeweils einem UWB-Token zugeordnet sind. Das Identifizieren umfasst:
- Erfassen von Sensordaten durch einen der Identifizierungssensoren in Form eines Empfangens eines von dem UWB-Token gesendeten UWB-Signals, welches infolge einer geometrischen Kodierung von zum Senden verwendeten Antennenstrukturen einer UWB-Antenne ein das UWB-Token identifizierendes individuelles Resonanzmuster aufweist,
- Bestimmen des individuellen Resonanzmusters,
- Vergleichen des bestimmten individuellen Resonanzmuster mit den Referenzmustern der Mehrzahl von Referenzmustern,
- im Falle, dass eine Übereinstimmung zwischen dem bestimmten individuellen Resonanzmuster und einem der Referenzmuster einen vordefinierten Schwellenwert überschreitet, Identifizieren des dem entsprechenden Referenzmuster zugeordneten UWB-Tokens als das sendende UWB-Token.

Ausführungsformen können den Vorteil haben, dass ein UWB-Überwachungssystem bereitgestellt wird, welches UWB-Token anhand individuellen Resonanzmuster zu identifizieren vermag. Da die Identifizierung auf Hardwareeigenschaften des UWB-Tokens beruht, kann ein hoher Grad an Sicherheit erzielt werden, dass es sich bei einem identifizierten UWB-Token tatsächlich um das entsprechende UWB-Token und keinen Klon handelt. Nach Ausführungsformen umfasst das UWB-Überwachungssystem das zumindest eine UWB-Token, welches es zu identifizieren vermag, falls sich das UWB-Token innerhalb des räumlichen Bereiches aufhält. Nach Ausführungsformen umfasst das UWB-Überwachungssystem eine Mehrzahl von UWB-Token, welche es zu identifizieren vermag, falls sich die UWB-Token innerhalb des räumlichen Bereiches aufhalten.

Nach Ausführungsformen umfasst das UWB-Token ferner Sensoren, welche Vitalfunktionen, wie etwa Atmung und/oder Puls, eines Trägers des UWB-Tokens erfassen können. Unter Verwendung der entsprechenden Sensoren kann mithin ein individuelles Atmungs- und/oder Pulsmuster des Trägers bestimmt werden. Das bestimmte Atmungs- und/oder Pulsmuster kann mit den Referenzmustern einer Mehrzahl von Atmungs- und/oder Pulsresonanzmustern verglichen werden. Im Falle, dass eine Übereinstimmung zwischen dem bestimmten individuellen Atmungs- und/oder Pulsmuster und einem der Referenzmuster einen vordefinierten Schwellenwert überschreitet, Identifizieren des dem entsprechenden Referenzmuster zugeordnete Person als den Träger des sendenden UWB-Tokens. Diese Identifizierungsverfahren kann basierend auf jede Art von Vitalfunktion und ein für diese Vitalfunktion bestimmtes Muster der Vitalfunktion verwendet werden.

Nach Ausführungsformen ist der räumliche Bereich beispielsweise ein zugangsbeschränkter räumlicher Bereich, etwa ein zugangsbeschränkten Sicherheitsbereich. Der zugangsbeschränkte räumliche Bereich ist beispielsweise gegenüber der Umgebung abgegrenzt und bestimmungsgemäß nur über ein oder mehrere Ein- bzw. Ausgänge betretbar. Beispielsweise handelt es sich bei dem zugangsbeschränkten räumlichen Bereich um einen Indoor-Bereich bzw. Innenbereich.

Nach Ausführungsformen umfasst die Mehrzahl von UWB-Sensoren eine Mehrzahl von UWB-Identifizierungssensoren, welche ferner konfiguriert sind zum Bestimmen von Positionsdaten des UWB-Tokens innerhalb des räumlichen Bereiches. Das Bestimmen der Positionsdaten umfasst Laufzeitmessungen von UWB-Signalen zwischen den UWB-Lokalisierungssensoren und den UWB-Token. Ausführungsformen können den Vorteil haben, dass Ausführungsformen können den Vorteil haben, dass die UWB-Lokalisierungssensoren die Position des UWB-Tokens effizient bestimmen können. Eine Lokalisierung von UWB-Token erfolgt beispielsweise mittel Triangulation unter Verwendung zumindest zwei oder drei Lokalisierungssensoren in Form von UWB-Antennen. Dabei können die Triangulationssignale von dem UWB-Token und/oder von den UWB-Antennen gesendet werden. Eine Auswertung der Triangulationssignale kann durch das UWB-Token und/oder die UWB-Antennen und/oder einem Auswertemodul des Überwachungssystems erfolgen.

Nach Ausführungsformen sind die UWB-Sensoren dazu konfiguriert relative Positionen und Bewegungen von mehreren UWB-Token zu erfassen, welche ein Träger trägt. Anhand der erfassten relativen Positionen und Bewegungen der UWB-Token kann eine Bewegungstriangulation von Bewegungen der UWB-Token infolge des Tragens durch den Träger und damit von Bewegungen des Trägers selbst ausgeführt werden. Anhand der so erfassten Bewegungen kann beispielsweise bestimmt werden, ob die UWB-Token tatsächlich von einem Träger getragen werden, ob sie von demselben Träger, d.h. einem Träger gemeinsam, getragen werden, der Träger kann beispielsweise authentifiziert werden und/oder es können Auffälligkeit in den Bewegungen des Trägers ermittelt werden. Enzsprechende Auffälligkeiten können beispielsweise auf ein Ausnahmeereignis hindeuten.

Nach Ausführungsformen umfassen die von der Mehrzahl von UWB-Sensoren erfassten Sensordaten personenbezogene Sensordaten und das UWB-Überwachungssystem ist konfiguriert zum
- Erfassen von Sensordaten in dem räumlichen Bereich, welche personenbezogene Sensordaten umfassen,
- Filtern der erfassten Sensordaten unter Verwendung eines Anonymisierungsfilters, wobei der Anonymisierungsfilter dazu konfiguriert ist, die personenbezogenen Sensordaten zu anonymisieren,
- Auswerten der erfassten Sensordaten zum Detektieren eines Ausnahmeereignisses,
- auf das Detektieren des Ausnahmeereignisses hin, zeitlich begrenzten Aussetzen des Anonymisierens der personenbezogene Sensordaten.

Ausführungsformen können den Vorteil haben, dass sichergestellt werden kann, dass personenbezogene Sensordaten, soweit diese von den UWB-Sensoren erfasst werden, in Folge der Anonymisierung nicht oder nur in einer solchen Form zur Verfügung gestellt werden, dass keine Rückschlüsse auf die Identität der Personen ermöglicht werden, auf welche die personenbezogenen Daten bezogen sind. Nach Ausführungsformen umfasst das Anonymisieren insbesondere ein Verändern personenbezogener Sensordaten derart, dass Einzelangaben über persönliche oder sachliche Verhältnisse nicht mehr oder nur mit einem unverhältnismäßig großen Aufwand an Zeit, Kosten und Arbeitskraft einer bestimmten oder bestimmbaren natürlichen Person zugeordnet werden können. Das Verändern umfasst beispielsweise ein inhaltliches Umgestalten erfasster personenbezogener Sensordaten bis hin zum Löschen derselben. Ein Löschen bezeichnet dabei beispielsweise ein Unkenntlichmachen personenbezogener Sensordaten bis hin zu einem vollständigen Entfernen der entsprechenden personenbezogenen Sensordaten von einem Speicher zum Speichern erfasster Sensordaten. Bei dem Speicher kann es sich beispielsweise um einen lokalen oder einen zentralen Speicher des UWB-Überwachungssystems handeln.

Nach Ausführungsformen handelt es sich bei den Authentifizierungsdaten um personenbezogenen Sensordaten. Personenbezogene Sensordaten bezeichnen Sensordaten, welche eine Identifikation einer Person ermöglichen oder einer Person zuordenbar sind, auf welche die personenbezogene Sensordaten bezogen sind. Insbesondere sind personenbezogene Sensordaten beispielsweise mittels eines der UWB-Sensoren erfasste Einzelangaben über persönliche oder sachliche Verhältnisse einer bestimmten oder bestimmbaren natürlichen Person. Beispielsweise umfassen die personenbezogene Sensordaten visuelle Sensordaten, wie etwa Video- und/oder Fotodaten, anhand derer eine Person erkannt werden kann. Dies ist insbesondere der Fall, wenn anhand der Video- und/oder Fotodaten ein Gesicht einer Person erkannt werden kann.

Ein Anonymisierungsfilter ist dazu konfiguriert selektiv personenbezogene Daten zu anonymisieren. Beispielsweise kann der Anonymisierungsfilter dazu konfiguriert sein Sensordaten, welche von bestimmten UWB-Sensoren bzw. einer bestimmten Art von UWB-Sensoren des UWB-Überwachungssystems erfasst werden, zu anonymisieren. Dabei handelt es sich beispielsweise um Video- und/oder Bilddaten, welche etwa unter Verwendung einer Überwachungskamera erfasst werden und auf denen individuelle Personen erkennbar sind.

Ein Ausnahmeereignis bezeichnet eine Anomalie in den erfassten Sensordaten, d.h. eine Datenkonstellation, welche unter vordefinierten Betriebsbedingungen nicht zu erwarten ist. Insbesondere kann es sich bei der Anomalie um eine Notfallsituation, wie etwa ein Feuer oder ein unerlaubtes Eindringen in den und/oder Bewegen innerhalb des räumlichen Bereiches.

Nach Ausführungsformen umfasst das Ausnahmeereignis einen erfolglosen Versuch eines Identifizierens des UWB-Tokens. Ausführungsformen können den Vorteil haben, dass im Falle eines dem UWB-Überwachungssystem unbekannten UWB-Tokens durch ein Aussetzen des Anonymisierens erfasst werden kann, um was für ein UWB-Token es sich handelt und/oder wer das UWB-Token tatsächlich mitführt.

Nach Ausführungsformen umfasst ein Ausnahmeereignis ein erfolgloses Authentifizieren. Ein erfolgloses Authentifizieren weist darauf hin, dass ein UWB-Token nicht von dem ihm zugeordneten Nutzer mitgeführt wird. Beispielsweise versucht der zugeordnete Nutzer sich ohne das UWB-Token innerhalb des räumlichen Bereiches zu bewegen oder das UWB-Token wird von einem nicht zugordneten Nutzer mitgeführt, welche sich so unberechtigterweise Zugang zu dem räumlichen Bereich verschafft hat oder verschaffen will. Durch ein Aussetzen des Anonymisierens kann erfasst werden, wer das UWB-Token tatsächlich mitführt und/oder wo der zugeordnete Nutzer sich aufhält.

Nach Ausführungsformen ist das Aussetzen des Anonymisierens auf personenbezogene Sensordaten beschränkt, welche von UWB-Sensoren erfasst werden, die einen vordefinierten Bezug zu dem detektierten Ausnahmeereignis aufweisen. Beispielsweise besteht ein vordefinierter Bezug darin, dass die UWB-Sensoren, für deren personenbezogene Sensordaten das Anonymisieren ausgesetzt wird, einem selben räumlichen Abschnitt des räumlichen Bereiches zugeordnet sind wie der oder die UWB-Sensoren, in deren erfassten Sensordaten das Ausnahmeereignis detektiert wird. Ausführungsformen können den Vorteil haben, dass das Aussetzen des Anonymisierens nicht nur zeitlich, sondern auch räumlich begrenzt wird. Mithin kann ein unnötiges Aussetzen des Anonymisierens, z.B. für personenbezogene Daten, welche nichts mit dem Ausnahmeereignis zu tun haben, vermieden werden. Nach Ausführungsformen besteht der vordefinierte Bezug zusätzlich oder alternativ darin, dass UWB-Sensoren, für deren personenbezogene Sensordaten das Anonymisieren ausgesetzt wird, vordefinierten räumlichen Abschnitt des räumlichen Bereiches zugeordnet sind. Bei den entsprechenden räumlichen Abschnitten handelt es sich beispielsweise um Zu- und Ausgänge eines zugangsbeschränkten Bereiches. Im Falle eines möglichen unberechtigten Eindringens in den zugangsbeschränkten räumlichen Bereich oder bei einem möglichen Notfall, wie etwa einem Feueralarm, kann es von Vorteil sein zu erfassen, wer den zugangsbeschränkten räumlichen Bereich betritt und/oder verlässt oder wer versucht den zugangsbeschränkten räumlichen Bereich zu betreten und/oder zu verlassen.

Nach Ausführungsformen wird das Anonymisieren aller durch das UWB-Überwachungssystem erfasster personenbezogener Sensordaten zeitlich begrenzt ausgesetzt. Ausführungsformen können den Vorteil haben, dass sichergestellt werden kann, dass keine für eine Handhabung und/oder Behebung des Ausnahmeereignisses relevanten und/oder notwendigen personenbezogener Sensordaten aufgrund der Anonymisierung fehlen.

Nach Ausführungsformen umfasst das Anonymisieren durch den Anonymisierungsfilter ein Löschen zumindest eines Teils der personenbezogenen Sensordaten. Das zeitlich begrenzte Aussetzen des Anonymisierens umfasst ein Speichern der personenbezogenen Sensordaten, welche innerhalb eines begrenzten Zeitfensters erfasst werden.

Ausführungsformen können den Vorteil haben, dass im Falle eines Löschens, d.h. eines vollständigen Entfernens personenbezogener Sensordaten von lokalen und/oder zentralen Speichern des UWB-Überwachungssystems, sichergestellt werden kann, dass niemand Zugriff auf diese Daten erlangen kann. Tritt jedoch ein Ausnahmeereignis auf, so werden nur für diesen speziellen Fall zeitlich begrenzt personenbezogener Sensordaten, wie etwa Video- und/oder Bilddaten, gespeichert. Nach Ausführungsformen werden die gespeicherten Daten zum Zwecke einer Datenanalyse bereitgestellt, insbesondere zum Zwecke einer Identifikation von Personen, auf welche die gespeicherten personenbezogenen Sensordaten bezogen sind.

Nach Ausführungsformen handelt es sich bei dem Speichern um ein zeitlich begrenztes Speichern. Beispielsweise werden die gespeicherten personenbezogenen Sensordaten nach ihrer Auswertung und/oder auf eine Beendigung der Ausnahmesituation hin wieder gelöscht. Nach Ausführungsformen handelt es sich bei dem Speichern um ein dauerhaftes Speichern.

Nach Ausführungsformen beginnt das begrenzte Zeitfenster mit dem Detektieren des Ausnahmeereignisses. Nach Ausführungsformen endet das begrenzte Zeitfenster mit Ablauf einer vorbestimmten Zeitspanne oder einem Enden des Detektierens des Ausnahmeereignisses.

Ausführungsformen können den Vorteil haben, dass das Speichern der personenbezogenen Sensordaten zeitlich auf ein Zeitfenster begrenzt bleibt, welches in Bezug zu dem Detektierten Ausnahmeereignis steht. Es kann beispielsweise davon ausgegangen werden, dass lediglich in diesem Zeitfenster erfasste personenbezogene Sensordaten im Kontext des detektierten Ausnahmeereignis von Relevanz sind. Nach Ausführungsformen endet das begrenzte Zeitfenster beispielsweise, wenn das Ausnahmeereignis nicht mehr detektiert wird bzw. nicht mehr detektierbar ist. Im Falle eines möglichen Feuers als Ausnahmeereignis kann das Ausnahmeereignis beispielsweise in Form eines Detektierens von Rauch durch einen als Rauchmelder ausgestalteten UWB-Sensor des Überwachungssystems detektiert werden. Wird das Ausnahmeereignis nicht mehr detektiert, d.h. kein Rauch mehr detektiert, wird beispielsweise das Aussetzen des Anonymisierens beendet. Nach Ausführungsformen wird am Ende der vorbestimmten Zeitspanne geprüft, ob das Ausnahmeereignis noch detektierbar ist und/oder ob weitere Voraussetzungen erfüllt sind. Ist das Ausnahmeereignis nicht mehr detektierbar ist und sind gegebenenfalls die weiteren Voraussetzungen erfüllt, wird das Aussetzen des Anonymisierens beendet. Andernfalls wird das Aussetzen nochmals um die vorbestimmte Zeitspanne wiederholt bzw. fortgesetzt. Weitere Voraussetzungen umfassen beispielsweise ein Protokollieren einer Bestätigung in dem UWB-Überwachungssystem, dass das Ausnahmeereignis überprüft wurde und keine weiteren Maßnahmen notwendig sind bzw. alle notwendigen Maßnahmen ergriffen wurden. Alternative oder zusätzlich können die weiteren Voraussetzungen beispielsweise ein Protokollieren einer Bestätigung in dem UWB-Überwachungssystem umfassen, dass das Aussetzen des Anonymisierens nicht und/oder nicht mehr notwendig ist. Die vorbestimmte Zeitspanne kann beispielsweise eine Länge von Sekunden und/oder Minuten aufweisen.

Nach Ausführungsformen erfolgt das Löschen der personenbezogenen Sensordaten jeweils durch den die zu löschenden personenbezogenen Sensordaten erfassenden UWB-Sensor. Nach Ausführungsformen umfasst das Speichern der personenbezogenen Sensordaten jeweils ein Übertragen der personenbezogenen Sensordaten durch den die zu speichernden personenbezogenen Sensordaten erfassenden UWB-Sensor zumindest teilweise und/oder vollständig mittels UWB an ein Speichermodul des UWB-Überwachungssystems. Nach Ausführungsformen umfasst das Speichern der personenbezogenen Sensordaten jeweils ein Übertragen der personenbezogenen Sensordaten durch den die zu speichernden personenbezogenen Sensordaten erfassenden UWB-Sensor zumindest teilweise und/oder vollständig mittels einer kabelgebundenen Datenverbindung an ein Speichermodul des UWB-Überwachungssystems.

Ausführungsformen können den Vorteil haben, dass bei einem direkten Löschen durch den erfassenden UWB-Sensor sichergestellt werden kann, dass die zu löschenden personenbezogenen Sensordaten innerhalb des Überwachungssystems nicht über den erfassenden UWB-Sensor hinausgelangen. Mithin kann effektiv verhindert werden, dass sich jemand au unerlaubte Weise Zugriff auf die personenbezogenen Sensordaten verschaffen kann. Ausführungsformen können ferner den Vorteil haben, dass die in dem Speichermodul gespeicherten personenbezogenen Sensordaten im Bedarfsfall zum Handhaben und/oder Beheben des Ausnahmeereignisses herangezogen werden können. Beispielsweise können die gespeicherten personenbezogenen Sensordaten analysiert werden, um zu bestimmen welche Personen in das Ausnahmeereignis involviert sind und/oder involviert sein könnten. Bei dem Speichermodul kann es sich um ein lokales Speichermodul einer Mehrzahl von dezentral über das UWB-Überwachungssystem verteilten Speichermodulen oder um ein zentrales Speichermodul des UWB-Überwachungssystems handeln.

Nach Ausführungsformen umfasst das Anonymisieren durch den Anonymisierungsfilter ein Verschlüsseln zumindest eines Teils der personenbezogenen Sensordaten. Nach Ausführungsformen umfasst das zeitlich begrenzte Aussetzen des Anonymisierens ein zeitlich begrenztes Bereitstellen der entsprechenden personenbezogenen Sensordaten in unverschlüsselter Form.

Ausführungsformen können den Vorteil haben, dass durch ein Verschlüsseln der personenbezogenen Sensordaten Zugriffe auf die personenbezogenen Sensordaten effektiv verhindert werden können. Andererseits kann im Falle eines Ausnahmeereignisses ein Zugriff auf bereits erfasste personenbezogenen Sensordaten mittels eines Entschlüsselns ermöglicht werden. Beispielsweise werden die personenbezogenen Sensordaten in entschlüsselter Form nur zeitlich begrenzt zur Verfügung gestellt.

Nach Ausführungsformen erfolgt das Verschlüsseln der personenbezogenen Sensordaten jeweils durch den die zu verschlüsselnden personenbezogenen Sensordaten erfassenden UWB-Sensor.

Ausführungsformen können den Vorteil haben, dass die personenbezogenen Sensordaten direkt bei ihrer Erfassung verschlüsselt werden und indem UWB-Überwachungssystem nur in verschlüsselter Form weiterverarbeitet werden. Eine Verschlüsselung kann beispielsweise mit einem öffentlichen kryptographischen Schlüssel eines asymmetrischen Schlüsselpaars erfolgen, sodass es von einem Besitzer des zugehörigen geheimen kryptographischen Schlüssels des entsprechenden asymmetrischen Schlüsselpaars entschlüsselt werden kann. Bei dem entsprechenden Besitzer handelt es sich beispielsweise um ein zentrales oder dezentrales Steuermodul des UWB-Überwachungssystems. Die geheimen kryptographischen Schlüssel werden beispielsweise in einem geschützten Speicherbereich eines Speichermoduls gespeichert, welcher dem entsprechenden Steuermodul zugeordnet ist. Nach Ausführungsformen stellt das Steuermodul allen UWB-Sensoren oder zumindest allen zum Erfassen personenbezogenen Sensordaten konfigurierten UWB-Sensoren einen einheitlichen öffentlichen kryptographischen Schlüssel zum Verschlüsseln zur Verfügung. Nach Ausführungsformen stellt das Steuermodul allen UWB-Sensoren oder zumindest allen zum Erfassen personenbezogenen Sensordaten konfigurierten UWB-Sensoren jeweils einen individuellen, dem entsprechenden UWB-Sensoren zugeordneten öffentlichen kryptographischen Schlüssel zum Verschlüsseln zur Verfügung. Nach Ausführungsformen stellt das Steuermodul den UWB-Sensoren oder zumindest den zum Erfassen personenbezogenen Sensordaten konfigurierten UWB-Sensoren jeweils gruppenweise einen individuellen, der entsprechenden Gruppe zugeordneten einheitlichen öffentlichen kryptographischen Schlüssel zum Verschlüsseln zur Verfügung. Die Gruppen können dabei so eingeteilt sein, dass sie jeweils UWB-Sensoren umfassen, welche demselben räumlichen Abschnitt des räumlichen Bereiches zugeordnet sind, bei welchen es sich um dieselbe Art von UWB-Sensor handelt oder welche zum Erfassen derselben Art von personenbezogenen Sensordaten konfiguriert sind.

Nach Ausführungsformen umfasst das Bereitstellen der personenbezogenen Sensordaten in unverschlüsselter Form ein Aussetzen des Verschlüsselns der personenbezogenen Sensordaten, welche innerhalb eines begrenzten Zeitfensters erfasst werden. Ausführungsformen können den Vorteil haben, dass der Aufwand für ein Entschlüsseln der entsprechenden personenbezogenen Sensordaten vermieden werden kann und diese personenbezogenen Sensordaten zudem unverschlüsselt bleiben. Nach Ausführungsformen umfasst das Bereitstellen der personenbezogenen Sensordaten in unverschlüsselter Form ein Entschlüsseln verschlüsselter personenbezogenen Sensordaten, welche innerhalb des begrenzten Zeitfensters erfasst werden. Ausführungsformen können den Vorteil haben, dass die personenbezogenen Sensordaten selbst im Falle eines Ausnahmeereignisses ausschließlich in verschlüsselter Form gespeichert werden. Ein Bereitstellen der personenbezogenen Sensordaten in unverschlüsselter Form kann somit effektiv zeitlich beschränkt werden.

Nach Ausführungsformen beginnt das begrenzte Zeitfenster eine vorbestimmte Zeitspanne vor dem Detektieren des Ausnahmeereignisses oder mit dem Detektieren des Ausnahmeereignisses. Nach Ausführungsformen endet das begrenzte Zeitfenster mit Ablauf einer vorbestimmten Zeitspanne nach dem Detektieren des Ausnahmeereignisses oder mit einem Enden des Detektierens des Ausnahmeereignisses.

Ausführungsformen können den Vorteil haben, dass das Bereitstellen der personenbezogenen Sensordaten in unverschlüsselter Form zeitlich auf ein Zeitfenster begrenzt bleibt, welches in Bezug zu dem Detektierten Ausnahmeereignis steht. Es kann beispielsweise davon ausgegangen werden, dass lediglich in diesem Zeitfenster erfasste personenbezogene Sensordaten im Kontext des detektierten Ausnahmeereignis von Relevanz sind. Nach Ausführungsformen endet das begrenzte Zeitfenster beispielsweise, wenn das Ausnahmeereignis nicht mehr detektiert wird bzw. nicht mehr detektierbar ist. Im Falle eines möglichen Feuers als Ausnahmeereignis kann das Ausnahmeereignis beispielsweise in Form eines Detektierens von Rauch durch einen als Rauchmelder ausgestalteten UWB-Sensor des Überwachungssystems detektiert werden. Wird das Ausnahmeereignis nicht mehr detektiert, d.h. kein Rauch mehr detektiert, wird beispielsweise das Aussetzen des Verschlüsselns beendet. Nach Ausführungsformen wird am Ende der vorbestimmten Zeitspanne geprüft, ob das Ausnahmeereignis noch detektierbar ist und/oder ob weitere Voraussetzungen erfüllt sind. Ist das Ausnahmeereignis nicht mehr detektierbar ist und sind gegebenenfalls die weiteren Voraussetzungen erfüllt, wird das Aussetzen des Verschlüsselns beendet. Andernfalls wird das Aussetzen nochmals um die vorbestimmte Zeitspanne wiederholt bzw. fortgesetzt. Weitere Voraussetzungen umfassen beispielsweise ein Protokollieren einer Bestätigung in dem UWB-Überwachungssystem, dass das Ausnahmeereignis überprüft wurde und keine weiteren Maßnahmen notwendig sind bzw. alle notwendigen Maßnahmen ergriffen wurden. Alternative oder zusätzlich können die weiteren Voraussetzungen beispielsweise ein Protokollieren einer Bestätigung in dem UWB-Überwachungssystem umfassen, dass das Aussetzen des Verschlüsselns nicht und/oder nicht mehr notwendig ist. Die vorbestimmte Zeitspanne kann beispielsweise eine Länge von Sekunden und/oder Minuten aufweisen. Ein Beginn des begrenzten Zeitfensters eine vorbestimmte Zeitspanne vor dem Detektieren des Ausnahmeereignisses kann den Vorteil haben, dass auch relevante personenbezogene Sensordaten, welche im Vorfeld des Ausnahmeereignisses erfasst wurden in unverschlüsselter Form bereitgestellt werden können.

Nach Ausführungsformen ist das UWB-Überwachungssystem ferner konfiguriert zum
- Empfangen einer Anfrage zum Freigeben von erfassten Sensordaten,
- Prüfen eines von der Anfrage umfassten Berechtigungsnachweises zum Zugriff auf die angefragte Sensordaten,
- auf eine erfolgreiche Prüfung des Berechtigungsnachweises hin, Freigeben des Zugriffs auf die angefragten Sensordaten.

Ausführungsformen können den Vorteil haben, dass erfasste Sensordaten, insbesondere personenbezogene Sensordaten, nur dazu berechtigten Personen zur Verfügung gestellt werden. Eine Freigabe von Sensordaten, wie etwa Daten der Position und/oder anderer Daten, erfolgt beispielsweise gemäß eines Berechtigungsprofiles des Anfragenden. Somit kann ein effektiver Datenschutzlayer in das UWB-Überwachungssystem integriert werden. Ein Berechtigungsnachweis kann beispielsweise in Form eines Berechtigungszertifikats erbracht werden. Nach Ausführungsformen wird die Anfrage beispielsweise von einem dezentralen oder zentralen Steuermodul des UWB-Überwachungssystems empfangen und geprüft. Im Falle einer erfolgreichen Prüfung erfolgt beispielsweise auch die Freigabe durch das entsprechende Steuermodul. Beispielsweise werden die angefragte Sensordaten in Antwort auf die Anfrage an den Sender der Anfrage gesendet oder auf einer Anzeigevorrichtung des UWB-Überwachungssystems angezeigt. Die Übertragung der angefragte Sensordaten erfolgt beispielsweise in verschlüsselter Form, insbesondere kann sie unter Verwendung einer Ende-zu-Ende-Verschlüsselung erfolgen.

Nach Ausführungsformen werden die erfassten Sensordaten in Kategorien eingeteilt und das Prüfen des Berechtigungsnachweises umfasst ein Prüfen, ob der Berechtigungsnachweis zu einem Zugriff auf Sensordaten der Kategorie berechtigt, welcher die angefragten Sensordaten zugeordnet sind.

Ausführungsformen können den Vorteil haben, dass Berechtigungen kategorieweise gewährt werden können, sodass Berechtigungsnachweise auf ein oder mehrere der Kategorien beschränkt werden können.

Nach Ausführungsformen werden die erfassten personenbezogenen Sensordaten in Kategorien eingeteilt und das Aussetzen der Anonymisierung erfolgt, beispielsweise in Abhängigkeit von der Art des detektierten Ausnaheereignisses, selektiv nur für ein oder mehrere ausgewählte Kategorien.

Nach Ausführungsformen wird die Zugriffsberechtigung des Berechtigungsnachweises auf das Detektieren des Ausnahmeereignisses hin zeitlich beschränkt erweitert. Eine Erweiterung des Berechtigungsnachweises bedeutet, das mit einem gegebenen Berechtigungsnachweis im Falle eines Detektierens eines Ausnahmeereignisses mehr Kategorien eingesehen werden dürfen, als wenn kein Ausnahmeereignis detektiert wird. Nach Ausführungsformen ist der Umfang der Erweiterung abhängig von der Art des detektierten Ausnahmeereignisses. Nach Ausführungsformen wird die Zugriffsberechtigung im Falle eines Detektierens eines Ausnahmeereignisses für alle gültigen Berechtigungsnachweise zum Zugriff auf zumindest eine Kategorie von Sensordaten auf alle Kategorien von Sensordaten zeitlich beschränkt erweitert.

Ausführungsformen können den Vorteil haben, dass beispielsweise in Abhängigkeit der Sensibilität der Sensordaten unterschiedliche Berechtigungsnachweise für einen Zugriff auf die entsprechenden Sensordaten notwendig sind und somit gesteuert werden kann, wer in welchem Umfang Zugriffsrechte auf die erfassten Sensordaten des UWB-Überwachungssystems gewährt bekommt. Somit kann eine Anpassung der Datenfreigabe beispielsweise durch das Berechtigungsprofil des Anfragenden an die aktuelle Gefahrensituation implementiert werden.

Nach Ausführungsformen werden den erfassten Sensordaten jeweils Ursprungs-IDs zugeordnet. Eine Voraussetzung für die erfolgreiche Prüfung des Berechtigungsnachweises umfasst eine gültige Bestätigung des Berechtigungsnachweises zum Zugriff auf die angefragten Sensordaten durch ein oder mehrere den Ursprungs-IDs der angefragten Sensordaten zugeordnete Instanzen.

Ausführungsformen können den Vorteil haben, das für einen Zugriff auf die erfassten Sensordaten eine Freigabe durch ein oder mehrere den Ursprungs-IDs, d.h. dem Ursprung, der angefragten Sensordaten zugeordnete Instanzen notwendig ist. Nach Ausführungsformen identifizieren die Ursprung-IDs jeweils den UWB-Sensor, welcher die entsprechenden Sensordaten erfasst hat, und/oder das UWB-Token, welches durch die entsprechenden Sensordaten sensiert wurde. Nach Ausführungsformen handelt es sich bei den entsprechenden Instanzen jeweils um die entsprechenden UWB-Sensoren, UWB-Token oder Nutzer bzw. Administratoren, welche den entsprechenden UWB-Sensoren oder UWB-Token zugeordnet sind.

Beispielsweise wird jeder lokalisierten Position, d.h. erfassten Sensordaten zur Lokalisation von UWB-Token, eine abgesicherte Information des UWB Token aufgeprägt, so dass stets Ursprung und Eigentümer der entsprechenden Sensordaten bekannt sind. Anfragen bezüglich einer Position oder Daten eines UWB-Tokens müssen in diesem Fall beispielsweise zuerst immer durch das betroffene UWB-Token oder einen Träger und/oder Vertreter desselben freigegeben werden.

Nach Ausführungsformen werden im Falle des Freigebens der angefragten Sensordaten Art, Zeit, Ort, Empfänger und/oder Verwendung der freigegebenen Sensordaten protokolliert.

Ausführungsformen können den Vorteil haben, dass anhand der entsprechenden Protokolle genau nachvollziehbar ist, was mit den erfassten Sensordaten geschieht, insbesondere wer Zugriff auf diese erhält. Nach Ausführungsformen erfolgt das Protokollieren in einer Blockchain. Eine Blockchain kann den Vorteil haben, dass diese eine fälschungssichere Speicherstruktur zum Speichern der zu protokollierenden Daten bereitstellt.

Nach Ausführungsformen umfasst das UWB-Überwachungssystem ein oder mehrere vortrainierte Maschinenlernmodule, welche jeweils dazu trainiert sind anhand von Anomalien in den erfassten Sensordaten Ausnahmeereignisse zu erkennen. Ausführungsformen können den Vorteil haben, dass ein automatisiertes Detektieren von Ausnahmeereignisse ermöglicht wird.

Nach Ausführungsformen umfasst die Mehrzahl von UWB-Sensoren eine Mehrzahl von Lokalisierungssensoren, welche zur Positionsbestimmung von UWB-Token innerhalb des räumlichen Bereiches konfiguriert sind. Die Positionsbestimmung erfolgt unter Verwendung von Laufzeitmessungen von UWB-Signalen zwischen UWB-Token und/oder Lokalisierungssensoren.

Ausführungsformen können den Vorteil haben, das unter Verwendung der UWB-Token effektiv überwacht werden kann, wo sich berechtigte Personen innerhalb des räumlichen Bereiches aufhalten. Beispielsweise erhält jede Peron, welche den räumlichen Bereich, etwa einen zugangsbeschränkten räumlichen Bereich, betritt einen entsprechenden UWB-Token. Wenn Daten zu einer Zuordnung eines UWB-Tokens zu einer bestimmten Person nicht oder kryptographisch gesichert, z.B. in verschlüsselter Form, gespeichert werden, wird durch die Überwachung der UWB-Token eine anonymisierte Überwachung der Träger der UWB-Token ermöglicht. Beispielsweise ist eine notwendige Voraussetzung für ein Entschlüsseln der Daten zur Zuordnung ein Detektieren eines Ausnahmeereignisses.

Eine Lokalisierung von UWB-Token erfolgt beispielsweise mittel Triangulation unter Verwendung zumindest zwei oder drei Lokalisierungssensoren in Form von UWB-Antennen. Dabei können die Triangulationssignale von dem UWB-Token und/oder von den UWB-Antennen gesendet werden. Eine Auswertung der Triangulationssignale kann durch das UWB-Token und/oder die UWB-Antennen und/oder einem Auswertemodul des Überwachungssystems erfolgen.

Nach Ausführungsformen sendet das UWB-Überwachungssystem einen Aktivierungscode. Die UWB-Token werden jeweils bei Eintritt in eine Sendereichweite des UWB-Überwachungssystems auf einen Empfang des Aktivierungscodes hin aktiviert und bei Verlassen der Sendereichweite des UWB-Überwachungssystems auf ein Ausbleiben des Empfangs des Aktivierungscodes hin deaktiviert.

Ausführungsformen können den Vorteil haben, dass das UWB-Token nur innerhalb des räumlichen Bereiches bzw. innerhalb der Sendereichweite des UWB-Überwachungssystems aktiv Signale unter Verwendung von UWB sendet und somit überhaupt detektierbar ist.

Nach Ausführungsformen umfasst das Aktivieren der UWB-Token jeweils ein Aktivieren eines Sendens von UWB-Signalen durch den jeweiligen UWB-Token, insbesondere das Aktivieren des Sendens von UWB-Signalen an das Überwachungssystem. Durch das Aktivieren wird der entsprechende UWB-Token für das Überwachungssystem sichtbar. Nach Ausführungsformen umfasst das Deaktivieren der UWB-Token jeweils ein Deaktivieren des Sendens von UWB-Signalen durch den jeweiligen UWB-Token, insbesondere das Deaktivieren des Sendens von UWB-Signalen an das Überwachungssystem. Durch das Deaktivieren wird der entsprechende UWB-Token für das Überwachungssystem unsichtbar.

Nach Ausführungsformen werden Zugangsberechtigungen zu und/oder Aufenthaltsberechtigungen in einem räumlichen Bereich, bei welchem es sich um einen zugangsbeschränkten räumlichen Bereich handelt, unter Verwendung der UWB-Token nachgewiesen.

Ausführungsformen können den Vorteil haben, das mittels der UWB-Token nicht nur Bewegungen der Träger innerhalb eines zugangsbeschränkten räumlichen Bereiches nachverfolgt werden können, sondern kontrolliert werden kann, ob eine Zugangsberechtigungen und/oder Aufenthaltsberechtigungen zu bzw. in dem zugangsbeschränkten räumlichen Bereich und/oder bestimmte räumlichen Abschnitte desselben vorliegt. Basierend hierauf kann erkannt werden, ob sich ein Träger eines UWB-Tokens berechtigter Weise in dem zugangsbeschränkten räumlichen Bereich und/oder einem räumlichen Abschnitt desselben aufhält. Beispielsweise können Zugangsschranken, wie etwa Türen zu dem zugangsbeschränkten räumlichen Bereich und/oder einem räumlichen Abschnitt desselben automatisch öffnen, wenn sich ein Träger eines UWB-Tokens mit gültiger Zugangsberechtigungen der Zugangsschranke nähert. Nach Ausführungsformen können für unterschiedliche räumliche Abschnitte des zugangsbeschränkten räumlichen Bereiches unterschiedliche Zugangsberechtigungen notwendig sein.

Nach Ausführungsformen werden Zugangsberechtigungen und/oder Aufenthaltsberechtigungen durch den Besitz des UWB-Tokens nachgewiesen. Nach werden Zugangsberechtigungen und/oder Aufenthaltsberechtigungen durch Berechtigungszertifikate nachgewiesen. Ein Berechtigungszertifikat ist ein digitales Zertifikat, welches einem UWB-Token und/oder einem Nutzer des entsprechenden UWB-Tokens eine Zugangsberechtigung und/oder Aufenthaltsberechtigung zuweist. Beispielsweise definiert ein Berechtigungszertifikat Zugangsberechtigungen und/oder Aufenthaltsberechtigungen, umfasst einen öffentlichen kryptographischen Schlüssel eines dem UWB-Token zugeordneten asymmetrischen kryptographischen Schlüsselpaars, eine Token-ID, Angeben zum Aussteller des Berechtigungszertifikats und/oder eine digitale Signatur eines Ausstellers. Bei dem Aussteller kann es sich beispielsweise um eine externe Instanz, dezentrales oder zentrales Steuermodul des UWB-Überwachungssystems oder einen anderen UWB-Token handeln, welcher selber über die erteilten Zugangsberechtigungen und/oder Aufenthaltsberechtigungen verfügt. Zugangsberechtigungen und/oder Aufenthaltsberechtigungen lassen sich beispielsweise unter Verwendung des Berechtigungszertifikats in Verbindung mit einer Signatur des UWB-Tokens unter Verwendung eines privaten kryptographischen Schlüssels des dem UWB-Token zugeordneten asymmetrischen kryptographischen Schlüsselpaars. Anhand des von dem Berechtigungszertifikat bereitgestellten öffentlichen kryptographischen Schlüssels kann die Signatur geprüft und mithin der Besitz des privaten kryptographischen Schlüssels seitens des UWB-Tokens verifiziert werden. Das Berechtigungszertifikat definiert beispielsweise für den Besitzer des privaten kryptographischen Schlüssels durch den Aussteller des Berechtigungszertifikats gewährte Zugangsberechtigungen und/oder Aufenthaltsberechtigungen. Nach Ausführungsformen sind die Zugangsberechtigungen und/oder Aufenthaltsberechtigungen zeitlich beschränkt. Beispielsweise ist eine zeitliche Beschränkung durch ein Ablaufdatum und/oder eine Ablaufzeit des Berechtigungszertifikats definiert.

Nach Ausführungsformen umfasst das Detektieren des Ausnahmeereignisses ein Erfassen einer Anzahl von Personen in dem räumlichen Bereich, etwa einem zugangsbeschränkten räumlichen Bereich, unter Verwendung der UWB-Sensoren, welche zumindest lokal von der Anzahl der unter Verwendung der UWB-Token in dem räumlichen Bereich erfassten Anzahl von zugangsberechtigten Personen abweicht.

Ausführungsformen können den Vorteil haben, dass Versuche sich ohne Zugangsberechtigung Zugang zu dem zugangsbeschränkten räumlichen Bereich oder Abschnitten desselben zu verschaffen und/oder Versuche sich der Bewegungsüberwachung durch das UWB-Überwachungssystem innerhalb des zugangsbeschränkten räumlichen Bereiches effektiv detektiert werden können.

Nach Ausführungsformen ist jedes der UWB-Token jeweils einem Nutzer zugeordnet. In den UWB-Token sind beispielsweise jeweils ein oder mehrere Referenzwerte für personenbezogenen Sensordaten zum Authentifizieren des zugeordneten Nutzers, d.h. Authentifizierungsdaten, gespeichert. Der Nachweis einer Zugangsberechtigung und/oder Aufenthaltsberechtigung unter Verwendung eines der UWB-Token umfasst beispielsweise ein Bestätigen eines Authentifizierens des dem entsprechenden UWB-Token zugeordneten Nutzers durch das UWB-Token. Das Authentifizieren durch das UWB-Token umfasst beispielsweise ein lokales Validieren von Authentifizierungsdaten durch das UWB-Token unter Verwendung der in dem UWB-Token gespeicherten ein oder mehreren Referenzwerten.

Nach Ausführungsformen umfassen die UWB-Token beispielsweise jeweils einen Sensor zum Erfassen der Authentifizierungsdaten. Nach Ausführungsformen werden die Authentifizierungsdaten des Nutzers beispielsweise jeweils durch einen Sensor der UWB-Tokens erfasst. Nach Ausführungsformen werden die Authentifizierungsdaten beispielsweise durch einen lokalen Sensor des UWB-Überwachungssystems erfasst und an den UWB-Token zum Validieren gesendet. Nach Ausführungsformen erfolgt das Senden der erfassten Authentifizierungsdaten in verschlüsselter Form. Nach Ausführungsformen werden die Referenzwerte in verschlüsselter Form gespeichert und das lokale Validieren der erfassten Authentifizierungsdaten erfolgt in verschlüsselter Form.

Nach Ausführungsformen umfassen die Authentifizierungsdaten biometrische Daten des Nutzers, welche unter Verwendung eines biometrischen Sensors erfasst werden. Biometrische Daten können beispielsweise umfassen: DNA-Daten, Fingerabdruckdaten, Körpergeometriedaten/Anthropometriedaten, wie etwa Gesichts-, Hand-, Ohrgeometriedaten, Handlinienstrukturdaten, Venenstrukturdaten, wie etwa Handvenenstrukturdaten, Irisdaten, Retinadaten, Stimmerkennungsdaten, Nagelbettmuster, Zahnmusterdaten.

Nach Ausführungsformen umfassen die Authentifizierungsdaten verhaltensbasierte Daten des Nutzers. Verhaltensbasiert Daten sind Daten, welche auf einem intrinsischen Verhalten des Nutzers beruhen und können beispielsweise umfassen: Bewegungsmuster, Gangmuster, Arm-, Hand-, Fingerbewegungsmuster, Lippenbewegungsmuster. Ein Verwenden von verhaltensbasierten Daten zum Authentifizieren des Nutzers kann den Vorteil haben, dass der Nutzer zum Zwecke des Authentifizierens sein übliches, für ihn charakteristisches Verhalten fortsetzen kann, ohne dass für ihn untypische zusätzliche Handlungen notwendig sind. Insbesondere muss der Nutzer sein übliches Verhalten nicht unterbrechen.

Zum Erfassen der verhaltensbasierten Daten wird ein Sensor zum Erfassen verhaltensbasierter Daten verwendet. Bei den verhaltensbasierten Daten handelt es sich beispielsweise um Bewegungsdaten, welche unter Verwendung eines als Bewegungssensor konfigurierten Authentifizierungssensor erfasst werden. Der Bewegungssensor kann beispielsweise einen Beschleunigungssensor umfassen. Eine Bewegung kann beispielsweise durch Integration über Beschleunigungsmesswerte, welche der Beschleunigungssensor erfasst, berechnet werden. Der Bewegungssensor kann beispielsweise zudem seine Lage im Raum und/oder Veränderungen der Lage detektieren. Beispielsweise umfasst der Bewegungssensor ein Gyroskop. Bei den durch den Bewegungssensor erfassten Bewegungsdaten handelt es sich beispielsweise um Beschleunigungs-, Neigungs- und/oder Positionsdaten.

Bei erfassten Bewegungsdaten handelt es sich beispielsweise um Daten von Bewegungen des UWB-Tokens, welche dadurch verursacht werden, dass der Nutzer das UWB-Token mit sich führt, beispielsweise am Körper trägt. Durch die charakteristischen Bewegungen des Nutzers wird der UWB-Token in einer für den Nutzer charakteristischer Weise mitbewegt. Dies ist selbst dann der Fall, wenn der Nutzer nicht aktive mit dem UWB-Token interagiert, z.B. keine Benutzerschnittstelle des UWB-Tokens, wie etwa eine Taste, eine Tastatur, einen Touchscreen, ein Mikrophon, nutzt.

Nach Ausführungsformen umfasst das UWB-Token ein Klassifikationsmodul, welches zum Erkennen eines oder mehrerer generischer Bewegungsmuster unter Verwendung von Bewegungsdaten konfiguriert ist. Bei den Bewegungsmustern kann es sich beispielweise um grob- und/oder feinmotorische Bewegungen des UWB-Tokens handeln, wie sie für eine Nutzung des UWB-Tokens, etwa ein Mitführen und/oder Tragen am Körper, durch einen individuellen Nutzer charakteristisch sind. Beispielsweise ist das Klassifikationsmodul zum Erkennen der generischen Bewegungsmuster unter Verwendung von Trainingsdatensätzen mit Bewegungsdaten einer Nutzerkohorte vortrainiert.

Nach Ausführungsformen wird der Nutzer im Zuge einer Einlernphase als Nutzer des UWB-Tokens registriert. Nach Ausführungsformen umfasst die Einlernphase ein Erfassen von Bewegungsdaten des Nutzers durch einen Authentifizierungssensor in Form eines Bewegungssensors des UWB-Tokens und Extrahieren von ein oder mehreren für den zu registrierenden Nutzer charakteristischen Referenzwerten.

Nach Ausführungsformen umfasst ein verhaltensbasiertes Authentifizieren eines Nutzers unter Verwendung des UWB-Tokens die folgenden Schritte:
- Erfassen von Bewegungsdaten durch einen Authentifizierungssensor in Form eines Bewegungssensors des UWB-Tokens,
- Eingeben der erfassten Bewegungsdaten in das Klassifikationsmodul,
- Generieren eines Klassifikationsergebnisses durch das Klassifikationsmodul, ob der aktuelle Nutzer ein in dem UWB-Token registrierte Nutzer ist,
- Erzeugen eines Authentifizierungssignals, falls das Klassifikationsergebnis ein Prüfungskriterium erfüllt, wobei das Authentifizierungssignal eine erfolgreiche Authentifizierung des aktuellen Nutzers signalisiert.

Das Prüfkriterium kann beispielsweise umfassen, dass eine ausreichen hohe Übereinstimmung zwischen den erfassten Bewegungsdaten und einem oder mehreren für den registrierten Nutzer hinterlegten Referenzwerten vorliegt. Ferner kann das Prüfkriterium umfassen, dass die erfassten Bewegungsdaten und/oder die verwendeten ein oder mehreren Referenzwerte ein maximales Alter nicht überschreiten.

Nach Ausführungsformen werden die vorgenannten Schritte des Erfassens der Bewegungsdaten, des Eingebens der Bewegungsdaten und des Generierens des Klassifikationsergebnisses wiederholt nacheinander ausgeführt. Ferner wird zusätzliche zum Schritt des Generierens des Klassifikationsergebnisse jeweils der Schritt ausgeführt:
- Speichern des Klassifikationsergebnisses in dem Speicher des UWB-Tokens.

Das Erzeugen eines Authentifizierungssignals umfasst beispielsweise:
auf eine Authentifizierungsanfrage hin, Zugreifen auf den Speicher des UWB-Tokens zum Auslesen des gespeicherten Klassifikationsergebnisses, beispielsweise des zuletzt gespeicherten Klassifikationsergebnisses,
Auslesen und Auswerten des Klassifikationsergebnisses gemäß dem Prüfungskriterium.

Nach Ausführungsformen können erfasste Bewegungsdaten im Falle einer erfolgreichen Authentifizierung des Nutzers zum Anpassen und/oder Verbessern der für den entsprechenden Nutzer hinterlegten Referenzwerte verwendet werden.

Nach Ausführungsformen ist die Authentifizierung wissensbasiert. Beispielsweise umfassen die Authentifizierungsdaten ein persönliches Passwort des Nutzers. Bei dem Passwort kann es sich beispielsweise um eine alphanumerische Zeichenfolge handeln.

Nach Ausführungsformen ist die Authentifizierung besitzbasiert. Nach Ausführungsformen umfassen die Authentifizierungsdaten signierte Daten eines oder mehrere weiterer dem Nutzer zugeordneter elektronischer Geräte, insbesondere mobile tragbare elektronische Geräte. Bei den entsprechenden elektronischen Geräten handelt es sich beispielsweise um Smart Devices, welche der Nutzer mit sich führt, etwa wie Smartphone, Smartwatch, Smartglasses, Phablets, Tablets, Smart band, Smart Keychain, Smartcard etc. Diese elektronischen Geräte senden ein reichweitenbeschränktes Signal, welches ihre Anwesenheit signalisiert. Beispielsweise umfasst das Signal eine ID des entsprechenden elektronischen Gerätes. Beispielsweise ist das Signal mit einem kryptographischen Signaturschlüssel des entsprechenden elektronischen Gerätes signiert. Bei dem Signal kann es sich beispielsweise um ein Bluetooth oder ein UWB-Signal handeln. Im Falle einer Nutzung eines UWB-Signals, handelt es sich bei der Mehrzahl von elektronischen Geräten um eine Mehrzahl von UWB-Token. Für ein erfolgreiches Authentifizieren des Nutzers kann es notwendig sein, dass dieser eine bestimmte Anzahl an ihm zugeordneten elektronischen Geräten mit sich führt. Ein elektronisches Gerät mag gestohlen werden, je höher jedoch die Anzahl der für das erfolgreiche Authentifizieren notwendigen elektronischen Geräten ist, desto geringer ist die Wahrscheinlichkeit, dass diese von einem anderen Nutzer als dem registrierten Nutzer mitgeführt werden, beispielsweise infolge eines Diebstahls.

Nach Ausführungsformen ist jedes der UWB-Token jeweils einem Nutzer zugeordnet. In den UWB-Token sind jeweils ein oder mehrere Referenzwerte für personenbezogenen Sensordaten zum Authentifizieren des zugeordneten Nutzers gespeichert. Der Nachweis einer Zugangsberechtigung und/oder Aufenthaltsberechtigung unter Verwendung eines der UWB-Token umfasst ein Bestätigen eines Authentifizierens des dem entsprechenden UWB-Token zugeordneten Nutzers durch das UWB-Token. Das Authentifizieren durch das UWB-Token umfasst ein lokales Validieren von personenbezogenen Sensordaten durch das UWB-Token unter Verwendung der in dem UWB-Token gespeicherten ein oder mehreren Referenzwerten.

Detektieren ein oder mehrere UWB-Sensoren, etwa Trittschallsensoren, Bewegungsmelder, Lichtschranken oder Gasdetektoren, eine Anwesenheit einer Person in einem räumlichen Abschnitt des räumlichen Bereiches, in welchem kein UWB-Token detektiert wird, so ist dies ein Hinweis auf einen Versuch eines unerlaubten Eindringens. Ebenso können Unterschiede in Bewegungsmustern von UWB-Token und detektierten Personen auf unberechtigte Aktivitäten hindeuten, etwa falls ein UWB-Token an einer Stelle ruht, während anhand der erfassten Sensordaten Bewegungen einer Person detektiert werden.

Nach Ausführungsformen umfasst ein Ausnahmeereignis beispielsweise ein Erfassen einer Anzahl von Personen, welche die Anzahl der erfassten zugangsberechtigten Personen bzw. der erfassten UWB-Token zumindest lokal überschreitet.

Nach Ausführungsformen umfasst das Detektieren des Ausnahmeereignisses ein Erfassen eines UWB-Tokens in einem räumlichen Abschnitt des räumlichen Bereiches, etwa eines zugangsbeschränkten räumlichen Bereiches, für welchen der entsprechende UWB-Token keine Zugangsberechtigung besitzt.

Nach Ausführungsformen umfasst das Detektieren des Ausnahmeereignisses ein Erfassen von nicht personenbezogenen Sensordaten, welche einen vordefinierten Schwellenwert überschreiten.

Ausführungsformen können den Vorteil haben insbesondere Notfallsituationen effektiv erkannt werden können, wie etwa ein Feuer unter Verwendung eines als Rauchmelder konfigurierten UWB-Sensors oder ein Einbruch unter Verwendung eines als Glasbruch konfigurierten UWB-Sensors. So kann beispielsweise erhöhte Bewegungsaktivität und ein gleichzeitiger Temperaturanstieg zunächst als unklares Ausnahmeereignis bis hin zur Gefahrensituation interpretiert werden.

Nach Ausführungsformen umfasst die Mehrzahl von UWB-Sensoren Sensoren zum Erfassen optischer, akustischer, chemischer, thermischer, elektromagnetischer und/oder vibrationsbasierter Sensordaten.

Ausführungsformen können den Vorteil haben, dass unter Verwendung der entsprechenden Sensoren eine Vielzahl unterschiedlicher Sensordaten erfasst und somit eine Vielzahl unterschiedlicher Situationen bzw. Gegebenheiten innerhalb des räumlichen Bereiches erkannt werden können. Die UWB-Sensoren umfassen beispielsweise ein oder mehrere UWB-Radarsensoren, Glasbruchsensoren, Trittschallsensoren, Gassensoren, Bewegungsmelder, Videosensoren, Infrarotsensoren, Temperatursensoren und/oder Rauchsensoren.

Positionsdaten der UWB-Token werden beispielsweise mittels der Lokalisierungssensoren erfasst. Sensordaten, welche indikativ für eine Anwesenheit einer Person sind, können beispielsweise unter Verwendung von UWB-Radar, Hochfrequenzstrahlung, Mikrowellenstrahlung, Dopplerradar, Laser, Ultraschall, Infraschall, Infrarotstrahlung, Vibrationsmessungen oder Gaskonzentrationsmessungen erfasst werden. Hält sich eine Person im Erfassungsbereich eines Sensors auf, reflektiert, streut oder unterbricht diese beispielsweise von dem Sensor ausgesandte Strahlung oder Wellen, wie UWB-Radar, Hochfrequenzstrahlung, Mikrowellenstrahlung, Dopplerradar, Laserstrahlen, Ultraschall, oder erzeugt messbare Strahlung, Wellen oder anderweitige Einflüsse, wie Infrarotstrahlung, Vibrationen, z.B. Trittschall, Infraschall oder Gaskonzentrationsänderungen, z.B. eine Erhöhung der Kohlenstoffdioxidkonzentration.

Nach Ausführungsformen umfasst das UWB-Überwachungssystem ein digitales Funknetzwerk mit einer Mesh-Topologie, welches zum Übertragen der erfassten Sensordaten unter Verwendung von UWB konfiguriert ist.

Ausführungsformen können den Vorteil haben, dass erfassten Sensordaten effektiv über das UWB-Überwachungssystem übertragen werden können. Ferner bietet eine Mesh-Topologie eine hohe Ausfallsicherheit, da bei einem Ausfall einzelner Komponenten der Mesh-Topologie weiterhin eine Datenübertragung über alternative Routen möglich ist. Zudem kann bei einem Ausfall eines Teilbereichs der Mesh-Topologie ein Betrieb mit dem verbleibenden Teil der Mesh-Topologie aufrechterhalten werden.

Nach Ausführungsformen können den Vorteil haben, dass in dem auf UWB basierenden Funknetzwerk mit einer Mesh-Topologie Positionsdaten für mehrere und/oder alle Netzwerknoten, d.h. UWB-Sensoren und/oder UWB-Token breitgestellt werden bzw. bestimmt werden können. Eine Bestimmung von Positionsdaten kann beispielsweise unter Verwendung eines auf Laufzeitmessungen von UWB-Signalen basierenden Triangulationsverfahrens erfolgen. Bei den Positionsdaten kann es sich um relative und/oder absolute Positionsdaten handeln. Zum bestimmen absoluter Positionsdaten müssen Positionsdaten zumindest ein oder mehrere stationärer Referenzpunkte bekannt sein. Ausführungsformen können den Vorteil haben, dass für eine zielgerichtete Weiterleitung von Daten in dem UWB-basierten Funknetzwerk mit Mesh-Topologie ein positionsbasiertes Routingverfahren genutzt werden kann, um unter Verwendung der mittels UWB bestimmten Positionsdaten jeweils einen kürzesten oder anderweitig besten Pfad zwischen einem Quellknoten und einem Zielknoten innerhalb des Funknetzwerks zu bestimmen.

Nach Ausführungsformen sind ein oder mehrere der UWB-Sensoren als UWB-Transceiver zum Weiterleiten von UWB-Übertragungssignalen konfiguriert. Nach Ausführungsformen umfasst das UWB-Überwachungssystem zusätzlich zu den UWB-Sensoren ein oder mehrere UWB-Transceiver, welche zum Weiterleiten der UWB-Übertragungssignale konfiguriert sind.

Ausführungsformen können den Vorteil haben, dass ein Weiterleiten von Daten mittels UWB in effektiver Weise unter Verwendung der UWB-Sensoren und/oder zusätzlicher UWB-Transceiver implementiert werden kann.

Ausführungsformen umfassen ferner ein Verfahren zum Steuern eines UWB-Überwachungssystems zur Überwachung eines räumlichen Bereiches. Das UWB-Überwachungssystem umfasst eine Mehrzahl von UWB-Sensoren, welche in dem räumlichen Bereich verteilt angeordnet und zum Erfassen von Sensordaten konfiguriert sind. Die UWB-Sensoren sind ferner für eine Kommunikation mittels UWB konfiguriert. Die Mehrzahl von UWB-Sensoren umfasst ein oder mehrere UWB-Identifizierungssensoren, welche konfiguriert sind zum Identifizieren zumindest eines UWB-Tokens nach einer der voranstehenden Ausführungsformen. In einem Speicher des UWB-Überwachungssystems ist eine Mehrzahl von Referenzmustern gespeichert, welche jeweils einem UWB-Token zugeordnet sind. Das Verfahren zum Identifizieren des UWB-Tokens umfasst:
- Erfassen von Sensordaten durch einen der Identifizierungssensoren in Form eines Empfangens eines von dem UWB-Token gesendeten UWB-Signals, welches infolge einer geometrischen Kodierung von zum Senden verwendeten Antennenstrukturen einer UWB-Antenne ein das UWB-Token identifizierendes individuelles Resonanzmuster aufweist,
- Bestimmen des individuellen Resonanzmusters,
- Vergleichen des bestimmten individuellen Resonanzmuster mit den Referenzmustern der Mehrzahl von Referenzmustern,
- im Falle, dass eine Übereinstimmung zwischen dem bestimmten individuellen Resonanzmuster und einem der Referenzmuster einen vordefinierten Schwellenwert überschreitet, Identifizieren des dem entsprechenden Referenzmuster zugeordneten UWB-Tokens als das sendende UWB-Token.

Nach Ausführungsformen ist das Verfahren zum Steuern des UWB-Überwachungssystems dazu konfiguriert jede der zuvor beschrieben Ausführungsformen des UWB-Überwachungssystems zu steuern.

Nach Ausführungsformen umfasst das Verfahren zum Steuern des UWB-Überwachungssystems ferner:
- Erfassen von Sensordaten in dem räumlichen Bereich, welche personenbezogene Sensordaten umfassen,
- Filtern der erfassten Sensordaten unter Verwendung eines Anonymisierungsfilters, wobei der Anonymisierungsfilter dazu konfiguriert ist, die personenbezogenen Sensordaten zu anonymisieren,
- Auswerten der erfassten Sensordaten zum Detektieren eines Ausnahmeereignisses,
- auf das Detektieren des Ausnahmeereignisses hin, zeitlich begrenzten Aussetzen des Anonymisierens der personenbezogene Sensordaten.

Im Weiteren werden Ausführungsformen der Erfindung mit Bezugnahme auf die Zeichnungen näher erläutert. Es zeigen:
- Figur 1: ein schematisches Diagramm eines exemplarischen UWB-Tokens,
- Figur 2: ein schematisches Diagramm exemplarischer Antennenstrukturen einer UWB-Antenne,
- Figur 3: ein schematisches Diagramm eines exemplarischen UWB-Tokens,
- Figur 4: ein schematisches Diagramm eines exemplarischen UWB-Tokens,
- Figur 5: ein schematisches Diagramm eines exemplarischen UWB-Überwachungssystems,
- Figur 6: ein schematisches Diagramm eines exemplarischen UWB-Überwachungssystems,
- Figur 7: ein schematisches Diagramm eines exemplarischen UWB-Sensors,
- Figur 8: ein Flussdiagramm eines exemplarischen Verfahrens zum Steuern eines UWB-Überwachungssystems,
- Figur 9: ein Flussdiagramm eines exemplarischen Verfahrens zum Steuern eines UWB-Überwachungssystems,
- Figur 10: ein Flussdiagramm eines exemplarischen Verfahrens zum Authentifizieren eines Nutzers eines UWB-Tokens,
- Figur 11: ein Flussdiagramm eines exemplarischen Verfahrens zum Authentifizieren eines Nutzers eines UWB-Tokens,
- Figur 12: ein Flussdiagramm eines exemplarischen Verfahrens zum Steuern eines UWB-Überwachungssystems und
- Figur 13: ein Flussdiagramm eines exemplarischen Verfahrens zum Steuern eines UWB-Überwachungssystems.

Elemente der nachfolgenden Ausführungsformen, die einander entsprechen, werden mit denselben Bezugszeichen gekennzeichnet.

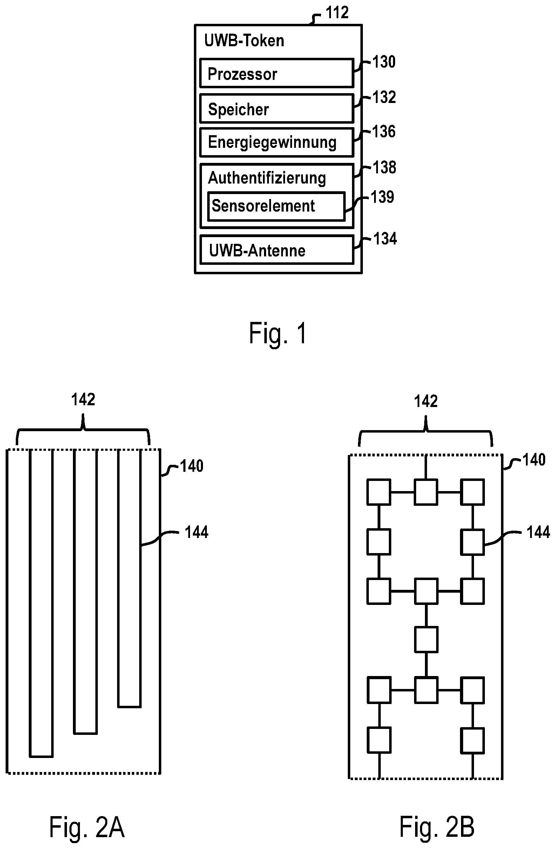

Figur 1 zeigt ein exemplarisches UBW-Token 112, welches einen Prozessor 130, einen Speicher 132 und eine UWB-Antenne 134 umfasst. Der Prozessor 130 ist dazu konfiguriert durch Ausführen von Programminstruktionen, welche beispielsweise in dem Speicher 132 gespeichert sind, den UBW-Token 112 zu steuern. Der UBW-Token 112 ist dazu konfiguriert über die UWB-Antenne 134 UWB-Signale zu senden und zu empfangen. Die UWB-Antenne 134 umfasst eine Mehrzahl von leitfähigen Antennenstrukturen, eine geometrische Kodierung mit einem das UWB-Token 112 identifizierenden individuellen Resonanzmuster aufweisen. Die leitfähigen Antennenstrukturen können streifenförmige und/oder flächige Antennenelemente umfassen. Insbesondere können die Antennenstrukturen eine Mehrzahl von aufeinander abgestimmte Einzelantennen umfassen, welche eine Patch-Antenne bilden. Anhand des resultierenden Resonanzmuster kann das UBW-Token 112, beispielsweise von einem das UWB-Signal des UBW-Tokens 112 empfangenden UWB-Überwachungssystem identifiziert werden. Beispielsweise sendet der UBW-Token 112 UWB-Signale, welche einen Zeitstempel umfassen. Anhand dieser UWB-Signale des UBW-Tokens 112 oder UWB-Signalen von UWB-Antennen bzw. UWB-Sensoren des UWB-Überwachungssystems kann der UBW-Token 112 durch das UWB-Überwachungssystem lokalisiert und/oder identifiziert werden. Ferner kann das eine Authentifizierungsmodul 138, welche ein Sensorelement 139 zum Erfassen von Authentifizierungsdaten des Nutzers umfasst. Bei dem Sensorelement 139 handelt es sich beispielsweise um einen Bewegungssensor zum Erfassen von Bewegungsdaten des UWB-Tokens 112, welcher beispielsweise an einem Band befestigt oder in ein band integriert ist, beim Tragen des UWB-Tokens 112 durch den Nutzer. Die Bewegungsdaten umfassen Daten von Pendelbewegungen des UWB-Tokens 112 beim Tragen. Das Authentifizierungsmodul 138 ist konfiguriert zum verhaltensbasierten Authentifizieren des Nutzers, der das UWB-Token 112 trägt, unter Verwendung der durch das Sensorelement 139 erfassten Bewegungsdaten. Ferner kann das UWB-Token 112 ein Energiegewinnungsmodul 136 umfassen, welches zum Gewinnen von elektrischer Energie für einen Betrieb des UWB-Tokens 112 durch Umwandeln kinetischer Energie in elektrische Energie konfiguriert ist. Das Umwandeln der kinetischen Energie in die elektrische Energie kann beispielsweise unter Verwendung eines elektromagnetischen, piezoelektrischen und/oder elektrostatischen Verfahrens erfolgen. Die umgewandelte kinetische Energie umfasst beispielsweise kinetische Energie von Pendelbewegung des Bandes beim Tragen des UWB-Tokens 112. Beispielsweise handelt es sich bei dem UWB-Token um ein Lanyard. Nach weiteren Ausführungsformen kann das UWB-Token 112 beispielsweise als ein Dokument oder ein Smart Device, z.B. ein Smartphone, eine Smartwatch, Smartglasses, ein Phablet, ein Tablet, ein Smartband, eine Smartkeychain, eine Smartcard ausgestaltet sein.

Figuren 2A und 2B zeigen jeweils exemplarische Antennenstrukturen 142 der UWB-Antenne eines UWB-Tokens. Die Antennenstrukturen 142 umfassen jeweils eine Mehrzahl von Antennenelemente 144, welche im Fall der Figur 2A streifenförmig und im Fall der Figur 2B flächig ausgestaltet sind. Bei den Antennenelementen handelt es sich beispielsweise jeweils um Einzelantennen, welche aufeinander abgestimmt sind und eine Patch-Antenne bilden. Die Antennenstrukturen 142 weisen jeweils eine geometrische Kodierung mit einem das UWB-Token identifizierenden individuellen Resonanzmuster auf.

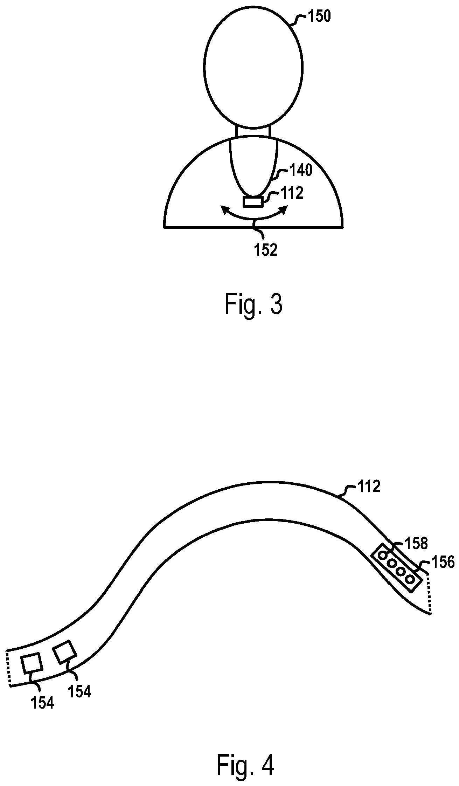

Figur 3 zeigt ein exemplarisches UWB-Token 112, welches ein Umhängeband 140 zum Tragen des UWB-Tokens 112 beispielsweise um einen Hals eines Nutzers 150 umfasst. Die UWB-Antenne des UWB-Tokens 112 ist beispielsweise in das Umhängeband 140 integriert. Die UWB-Antenne umfasst eine Mehrzahl von leitfähigen Antennenstrukturen, welche eine geometrische Kodierung mit einem das UWB-Token112 identifizierenden individuellen Resonanzmuster aufweisen. Beispielsweise sind streifenförmige und/oder flächige Antennenelemente der Antennenstrukturen entlang der Erstreckungsrichtung des Umhängebandes 140 verteilt angeordnet. Beispielsweise erstrecken sich die streifenförmige und/oder flächige Antennenelemente entlang der Erstreckungsrichtung des Umhängebandes 140. Infolge von Bewegungen des Nutzer 150 wird das UWB-Token 112 in Bewegung versetzt. Die Bewegung des UWB-Tokens 112 umfasst Pendelbewegungen 152, welche charakteristisch für den individuellen Nutzer 150 des UWB-Tokens 112 sind. Diese Pendelbewegungen 152 können zum Authentifizieren des Nutzer 150 unter Verwendung eines Authentifizierungsmoduls des UWB-Tokens 112 und/oder zur Energiegewinnung genutzt werden, etwa durch ein Umwandeln von kinetischer Energie in elektrische Energie unter Verwendung eines Energiegewinnungsmoduls des UWB-Tokens 112.

Figur 4 zeigt ein exemplarisches UWB-Token 112 in Form eines Bandes, welches ein oder mehrere Sensoren154. Die Sensoren 154 können beispielsweise einen Bewegungssensor und/oder Sensoren zur Erfassung von Vitalfunktionen eines Trägers des Bandes, wie beispielsweise Puls und/oder Atmung, umfassen. Unter Verwendung der Sensoren kann beispielsweise bestimmt werden, ob das UWB-Token 112 getragen wird, und/oder der Träger des UWB-Tokens 112 kann authentifiziert werden, beispielsweise unter Verwendung eines mittels der Sensoren 154 erfassten Bewegungsmusters des UWB-Tokens 112 beim Tragen durch den Träger, eines mittels der Sensoren 154 erfassten Pulsmusters des Trägers und/oder eines mittels der Sensoren 154 erfassten Atmungsmusters des Trägers.

Nach Ausführungsformen umfasst das Band eine Anzeigevorrichtung 156, welche beispielsweise ein Display und/oder ein oder mehrere LEDs 158 umfasst. Die Anzeigevorrichtung 156 kann beispielsweise ein Ergebnis einer Authentifizierung, z.B. deren Erfolg, unter Verwendung der ein oder mehreren Sensoren 154 anzeigen. Ferner kann die Anzeigevorrichtung 156 beispielsweise einen Ladestatus eines Energiespeichermoduls, z.B. eines Ackumulators, und/oder einen Energiegewinnungsstatus eines Energiegewinnungsmoduls des UWB-Tokens 112 anzeigen.

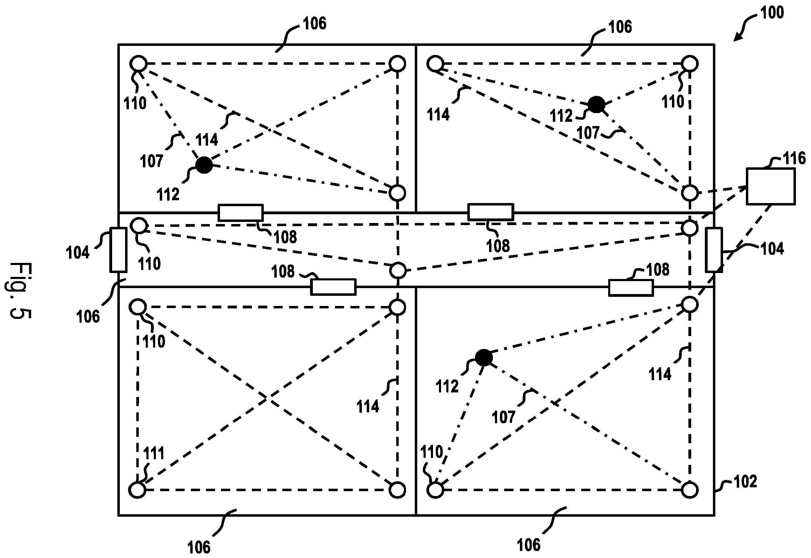

Figur 5 zeigt ein exemplarisches UWB-Überwachungssystem 100 zur Überwachung eines räumlichen Bereiches 102, etwa eines zugangsbeschränkten räumlichen Bereiches. Handelt es sich bei dem räumlichen Bereich 102 um einen zugangsbeschränkten räumlichen Bereich, ist dieser zugangsbeschränkte räumliche Bereich beispielsweise gegenüber der Umgebung abgegrenzt und bestimmungsgemäß nur über ein oder mehrere Ein- bzw. Ausgänge 104 betretbar. Beispielsweise handelt es sich bei dem räumlichen Bereich um einen Indoor-Bereich bzw. Innenbereich innerhalb eines Gebäudes. Alternativ oder zusätzlich kann der räumliche Bereich auch einen Outdoor-Bereich bzw. Außenbereich außerhalb eines Gebäudes umfassen. Beispielsweise kann dieser Outdoor-Bereich ein zugangsbeschränkter Bereich sein, welcher eingefriedet ist. Eine Einfriedung kann beispielsweise einen Zaun, eine Mauer und/oder eine Hecke umfassen. Ein zugangsbeschränkte räumliche Bereich 102 kann beispielsweise in eine Mehrzahl räumlicher Abschnitte 106 unterteilt sein, welche selbst jeweils bestimmungsgemäß nur über ein oder mehrere Ein- bzw. Ausgänge 108 betretbar sind.

Das UWB-Überwachungssystem 100 umfasst eine Mehrzahl von über den räumlichen Bereich 102 verteilten UWB-Sensoren 110. Die UWB-Sensoren 110 sind für ein Erfassen von Sensordaten, wie etwa Positionsdaten, Bewegungsdaten, Bilddaten, Tondaten, Vibrationsdaten, Temperaturdaten, Strukturdaten, Gaskonzentrationsdaten, Partikelkonzentrationsdaten etc. konfiguriert. Ferner sind die UWB-Sensoren 110 für ein Übertragen der erfassten Sensordaten mittels UWB, d.h. über ein von dem UWB-Überwachungssystem 100 bereitgestellten UWB-Netzwerk, konfiguriert. Hierbei können die UWB-Sensoren 110 als UWB-Transceiver zum Weiterleiten von UWB-Übertragungssignalen innerhalb des Überwachungssystem 100 konfiguriert. Ferner kann das UWB-Überwachungssystem 100 zusätzlich zu den UWB-Sensoren 110 ein oder mehrere UWB-Transceiver 111 umfassen, welche zum Weiterleiten der UWB-Übertragungssignale konfiguriert sind. Das von dem Überwachungssystem 100 implementierte UWB-Netzwerk ist beispielsweise ein digitales Funknetzwerk mit einer Mesh-Topologie, welches zum Übertragen der erfassten Sensordaten unter Verwendung von UWB konfiguriert ist. Beispielsweise erfolgt eine Übertragung von Sensordaten innerhalb des UWB-basierten Funknetzwerks mit Mesh-Topologie unter Verwendung eines positionsbasierten Routingverfahrens. Nach Ausführungsformen erfolgt eine Datenübertragung der UWB-Sensoren 110 ausschließlich mittels UWB. Nach Ausführungsformen sind ein oder mehrere der UWB-Sensoren 110 zusätzlich für eine zumindest teilweise und/oder vollständig kabelgebundene Übertragen der erfassten Sensordaten konfiguriert. Nach Ausführungsformen sind alle UWB-Sensoren 110 zusätzlich für eine zumindest teilweise und/oder vollständig kabelgebundene Übertragen der erfassten Sensordaten konfiguriert. Beispielsweise kann auch eine UWB-Radarfunktionalität für die Detektion von Personen eingebunden und/oder implementiert werden, welche keinen UWB-Token tragen.

Die UWB-Sensoren 110 umfassen beispielsweise Anonymisierungsfilter, welche dazu konfiguriert sind, die erfassten Sensordaten zu filtern. Im Zuge des Filterns werden personenbezogene Sensordaten anonymisiert. Personenbezogene Sensordaten umfassen beispielsweise Bilddaten, auf welche Personen identifizierbar sind. Die gefilterten Sensordaten werden beispielweise über das UWB-Netzwerk an ein Steuermodul 116 übertragen. Bei dem Steuermodul 116 kann es sich um ein zentrales Steuermodul oder ein dezentrales Steuermodul handeln. Das Steuermodul 116 ist beispielsweise dazu konfiguriert die von den UWB-Sensoren 110 erfassten Sensordaten auszuwerten zum Detektieren von Ausnahmeereignissen, wie etwa einer Gefahrensituation oder einem unberechtigten Zutritt zu dem räumlichen Bereich 102. Auf das Detektieren eines Ausnahmeereignisses hin, wird das Anonymisierens der personenbezogene Sensordaten zeitlich begrenzt ausgesetzt.

Das Steuermodul 116 ist beispielsweise ferner dazu konfiguriert Anfragen nach erfassten Sensordaten zu empfangen, Berechtigungsnachweise zum Zugriff auf die entsprechenden Sensordaten zu prüfen und im Falle einer erfolgreichen Prüfung Zugriff auf die angefragten Sensordaten zu gewähren. Im Falle eines detektierten Ausnahmeereignisses wird beispielsweise auch ein Zugriff auf personenbezogene Sensordaten gewährt, deren Anonymisierung vorübergehend ausgesetzt ist. Die Berechtigungsnachweise können beispielsweise auf Berechtigungszertifikaten und/oder Berechtigungsprofilen der Anfragenden basieren, welche Zugriffsberechtigungen der Anfragenden definieren. In einem Nutzer und/oder UWB-Token zugeordneten Berechtigungsprofil sind beispielsweise sämtliche einem und/oder UWB-Token zugeordneten Zugriffsberechtigungen gespeichert. Der Umfang der gewährten Zugriffsberechtigung kann nach Ausführungsformen beispielsweise davon abhängen, ob eine Ausnahmesituation detektiert wird.

Das Überwachungssystem 100 kann ferner dazu konfiguriert sein unter Verwendung von UWB-Sensoren 110 UWB-Token 112 innerhalb des räumlichen Bereiches 102 zu identifizieren und zu lokalisieren. Ein Identifizieren erfolgt beispielsweise anhand von UWB-Signalen der UWB-Token 112, welche jeweils ein individuelles Resonanzmuster aufweisen, anhand dessen die UWB-Sensoren 110 die UWB-Token 112 identifizieren können. Zum Lokalisieren werden beispielsweise UBW-Lokalisierungssignale 107 verwendet, welche von den UWB-Antennen 110 an die entsprechenden UWB-Token 112 gesendet werden und umgekehrt. Anhand von Laufzeitunterschieden der übertragenen Signale können beispielsweise mittels Triangulation die relativen Positionen der UBW-Token 112 zu den festinstallierten UWB-Antennen 110 und somit die Positionen der UBW-Token 112 in dem räumlichen Bereich 102 präzise bestimmt werden. Da die übertragenen UBW-Lokalisierungssignale 107 ohne Kenntnis der verwendeten UWB-Kodierung kaum von Hintergrundrauschen zu unterscheiden sind und somit effektiv obfuskiert werden, können Versuche einer unberechtigten Lokalisierung der UWB-Token 112 im Zuge von unerlaubten Ausspähversuchen effektiv verhindert werden. Dies wird zusätzlich unterstützt durch die verhältnismäßig kurze Reichweite der UWB-Signale, welche Ausspähversuche aus der Ferne effektiv kontern. Die UWB-Token 112 kennzeichnen beispielsweise Nutzer bzw. Träger mit Zugangsberechtigung zu dem räumlichen Bereich 102, falls es sich bei diesem um einen zugangsbeschränkten räumlichen Bereich handelt. Ferner können die UWB-Token 112 trägerspezifische Zugangsberechtigungen definieren, falls für einzelne räumliche Abschnitte des räumlichen Bereiches 102 unterschiedliche Zugangsberechtigungen notwendig sind. Anhand der UWB-Token 112 kann somit bestimmt werden, wo sich zugangsberechtigte Personen aufhalten. Falls Personen detektiert werden, welchen kein UWB-Token 112 zugeordnet werden kann, ist dies ein Hinweis auf einen Versuch eines unberechtigten Eindringens, welcher beispielsweise als ein Ausnahmeereignis detektiert wird.

Die UWB-Token 112 können ferner als Authentifizierungsmodulen konfiguriert sein und einen Authentifizierungssensor in Form eines Bewegungssensors zum Erfassen von Authentifizierungsdaten des Nutzers des UWB-Tokens 112 in Form von Bewegungsdaten des UWB-Tokens 112 umfassen. Anhand der erfassten Authentifizierungsdaten kann der Nutzer des UWB-Tokens 112 authentifiziert werden. Im Falle eines erfolgreichen Authentifizierens handelt es sich bei dem Nutzer des UWB-Tokens 112 um den dem UWB-Token 112 zugordneten Nutzer. Mithin können als Positionsdaten des entsprechenden Nutzers die Positionsdaten des UWB-Tokens 112 verwendet werden. Im Falle eines erfolglosen Authentifizierens handelt es sich bei dem Nutzer des UWB-Tokens 112 nicht um den zugeordneten Nutzer. Mithin liegt ein Manipulationsversuch vor, welcher auf diese Wiese effektiv erkannt werden kann.

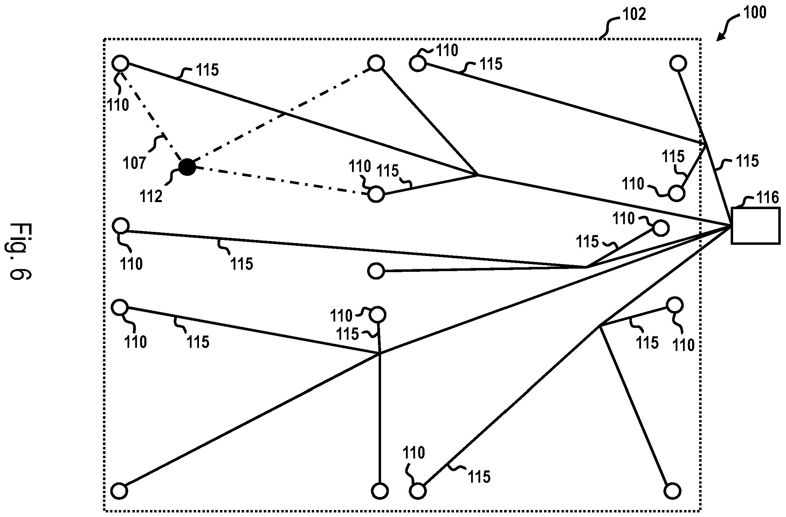

Figur 6 zeigt ein exemplarisches UWB-Überwachungssystem 100 zur Überwachung eines räumlichen Bereiches 102. Das gezeigte UWB-Überwachungssystem entspricht weitestgehend dem in Figur 5 gezeigten UWB-Überwachungssystem, allerdings erfolgt eine Kommunikation innerhalb des UWB-Überwachungssystems 100 kabelgebunden unter Verwendung eine LAN-Netzwerkes. Nach Ausführungsformen können eine Verwendung von UWB und LAN auch miteinander kombiniert werden. Beispielsweise wird beides simultan verwendet oder eine UWB-Kommunikation ist als Ausfallschutz für den Fall eines Versagens des Lan-Metzwerks implementiert. Das UWB-Überwachungssystem 100 umfasst eine Mehrzahl von über den räumlichen Bereich 102 verteilten UWB-Sensoren 110. Die UWB-Sensoren 110 sind für ein Erfassen von Sensordaten, wie etwa Positionsdaten, Bewegungsdaten, Bilddaten, Tondaten, Vibrationsdaten, Temperaturdaten, Strukturdaten, Gaskonzentrationsdaten, Partikelkonzentrationsdaten etc. konfiguriert. Die UWB-Sensoren 110 sind mittels LAN-Verbindungen 115 zur Übertragung erfasster Sensordaten an ein lokales kabelgebundenes Netzwerk mit einem Steuerungsmodul 116 zum Steuern des Betriebs des UWB-Überwachungssystems 100 angeschlossen. Das Steuerungsmodul 116 ist zur Steuerung des UWB-Überwachungssystems 100 konfiguriert. Einige UWB-Sensoren der Mehrzahl von UWB-Sensoren 110 umfassen ein Steuermodul mit einer Notfunktion. Die Notfunktion umfasst Steuerungsfunktionen zumindest zum lokalen Betrieb eines Teils des UWB-Überwachungssystems 100 unter Verwendung eines UWB-Mesh-Netzwerks. Nach Ausführungsformen können beispielsweise auch nur die UWB-Sensoren 110 mit Steuermodul mittels LAN-Verbindungen 115 an das lokale kabelgebundene Netzwerk angeschlossen sein. Die weiteren UWB-Sensoren 110 können in diesem Fall beispielsweise mittels UWB-Verbindungen über die UWB-Sensoren 110 mit Steuermodul mit dem Steuerungsmodul 116 verbunden sein.

Das Überwachungssystem 100 kann ferner dazu konfiguriert sein unter Verwendung der UWB-Sensoren 110 UWB-Token 112 innerhalb des räumlichen Bereiches 102 zu lokalisieren. Hierzu werden beispielsweise UBW-Lokalisierungssignale 107 verwendet, welche von als Lokalisierungssensoren konfigurierten UWB-Sensoren 110 an die entsprechenden UWB-Token 112 gesendet werden und umgekehrt. Anhand von Laufzeitunterschieden der übertragenen Signale können beispielsweise mittels Triangulation die relativen Positionen der UBW-Token 112 zu den UWB-Antennen der festinstallierten UWB-Sensoren 110 und somit die Positionen der UBW-Token 112 in dem räumlichen Bereich 102 präzise bestimmt werden. Das lokale kabelgebundene Netzwerk kann eine beliebige Netzwerktopologie aufweisen. Die UWB-Token 112 können jeweils ein Authentifizierungsmodul umfassen.

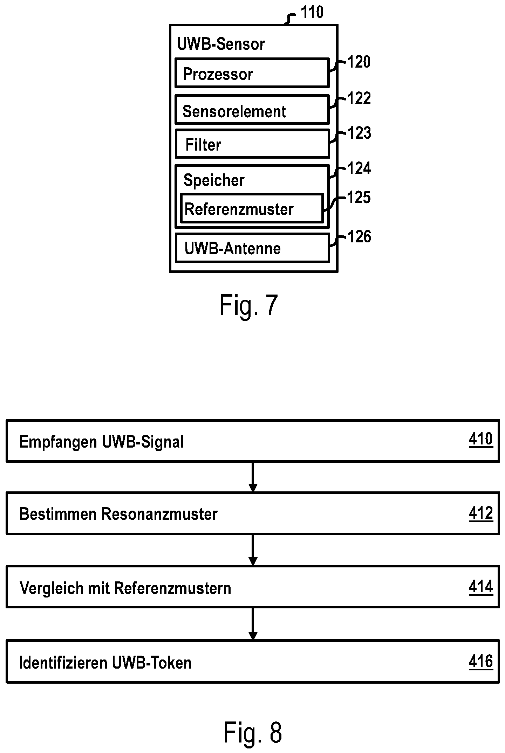

Figur 7 zeigt einen exemplarischen UBW-Sensor 110. Dieser UBW-Sensor 110 umfasst einen Prozessor 120, welcher Programminstruktionen ausführt, die beispielsweise in einem Speicher 124 des UBW-Sensor 110 gespeichert sind, und den UBW-Sensor 110 gemäß den Programminstruktionen steuert. Der UBW-Sensor 110 umfasst ferner ein Sensorelement 122, welches beispielsweise zum Erfassen optischer, akustischer, chemischer, thermischer, elektromagnetischer und/oder vibrationsbasierter Sensordaten konfiguriert ist. Die erfassten Sensordaten können beispielsweise in Abhängigkeit des verwendeten Sensorelements 122 personenbezogene Sensordaten umfassen. Falls der UWB-Sensor 110 zum Erfassen personenbezogene Sensordaten konfiguriert ist, umfasst der UWB-Sensor 110 ferner einen Anonymisierungsfilter zum Anonymisieren der personenbezogene Sensordaten, andernfalls nicht. Das Anonymisieren kann beispielsweise ein Löschen der erfassten personenbezogene Sensordaten von dem Speicher 124 umfassen. Ferner das Anonymisieren beispielsweise ein Verschlüsseln der erfassten personenbezogene Sensordaten umfassen. Schließlich umfasst der UWB-Sensor 110 eine UWB-Antenne 126 zum Senden und Empfangen von Daten mittels UWB. Bei den erfassten Sensordaten handelt es sich beispielsweise um ein UWB-Signal eines UWB-Tokens. In diesem Fall kann das Sensorelement mit der UWB-Antenne identisch sein. Das empfangene UWB-Signal kann ein das sendende UWB-Token identifizierendes individuelle Resonanzmuster aufweisen. Ein Ausführen der Programminstruktionen durch den Prozessor 120 kann den UBW-Sensor 110 dazu veranlassen, das individuelle Resonanzmuster zu Bestimmen und durch Vergleich mit in dem Speicher 124 gespeicherten Referenzmustern 125 zu identifizieren.

Figur 8 zeigt ein exemplarisches Verfahren zum Steuern eines UWB-Überwachungssystems, welches eine Mehrzahl von UWB-Sensoren umfasst. Die UWB-Sensoren sind für eine Kommunikation mittels UWB konfiguriert und umfassen ein oder mehrere UWB-Identifizierungssensoren, welche konfiguriert sind zum Identifizieren eines UWB-Tokens. Das Verfahren zum Identifizieren des UWB-Tokens umfasst in Block 410 ein Erfassen von Sensordaten durch einen der Identifizierungssensoren in Form eines Empfangens eines von dem UWB-Token gesendeten UWB-Signals. Das empfangene UWB-Signal weist infolge einer geometrischen Kodierung von zum Senden verwendeten Antennenstrukturen einer UWB-Antenne des UWB-Tokens ein das UWB-Token identifizierendes individuelles Resonanzmuster auf. In Block 412 wird das individuelle Resonanzmuster des empfangenen UWB-Signals bestimmt. In Block 414 wird das bestimmte individuelle Resonanzmuster mit Referenzmustern einer Mehrzahl von Referenzmustern verglichen. Diese Referenzmuster sind beispielsweise in einem Speicher des UWB-Überwachungssystems gespeichert und jeweils einem UWB-Token zugeordnet. Im Falle, dass eine Übereinstimmung zwischen dem bestimmten individuellen Resonanzmuster und einem der Referenzmuster einen vordefinierten Schwellenwert überschreitet, wird das UWB-Token, welches dem entsprechenden Referenzmuster zugeordnet ist, als das sendende UWB-Token identifiziert.

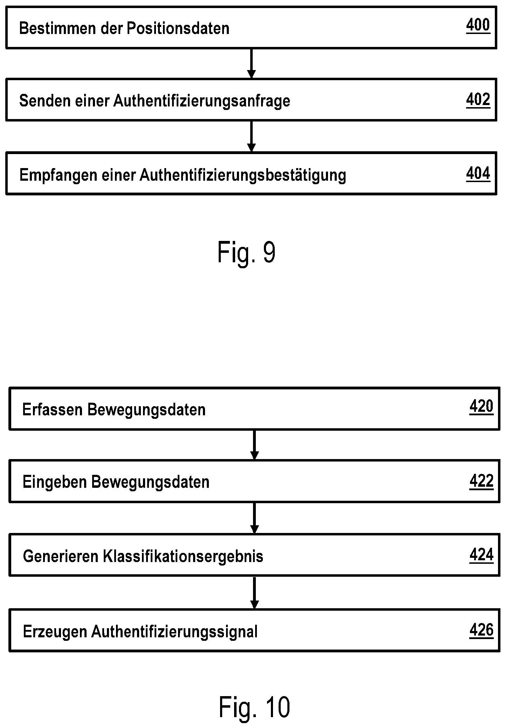

Figur 9 zeigt ein exemplarisches Verfahren zum Steuern eines UWB-Überwachungssystems. In Block 400 werden Positionsdaten des UWB-Tokens innerhalb des räumlichen Bereiches unter Verwendung der Lokalisierungssensoren bestimmt. Zu diesem Zwecke wird eine Laufzeitmessung von UWB-Signalen zwischen den Lokalisierungssensoren und dem UWB-Token ausgeführt, aus welcher beispielsweise mittels Triangulation und Kenntnis der Positionen der Lokalisierungssensoren eine aktuelle Position des UWB-Tokens bestimmt werden kann. Diese Bestimmung der Positionsdaten des UWB-Tokens kann wiederholt, beispielsweise kontinuierlich erfolgen, und Bewegungen des UWB-Tokens durch den räumlichen Bereich 102 nachverfolgt werden. In Block 402 wird eine Authentifizierungsanfrage an die Authentifizierungsmodul zum Prüfen der Anwesenheit des UWB-Tokens an dem zugeordneten Nutzer gesendet. Beispielsweise umfasst das UWB-Token die Authentifizierungsmodul und die Authentifizierungsanfrage wird an das UWB-Token gesendet. In Block 404 wird auf eine erfolgreiche Authentifizierung des Nutzers des UWB-Tokens hin eine Authentifizierungsbestätigung von der Authentifizierungsmodul empfangen. Diese Authentifizierungsbestätigung bestätigt ein erfolgreiches Validieren der erfassten Authentifizierungsdaten des Nutzers bestätigt, welches die Anwesenheit des UWB-Tokens an dem Nutzer anzeigt. Hierbei setzt ein erfolgreiches Validieren voraussetzt, dass eine ausreichende Übereinstimmung der erfassten Authentifizierungsdaten mit dem Referenzwert vorliegt.

Figur 10 zeigt ein exemplarisches Verfahren zum Authentifizieren eines Nutzers eines UWB-Tokens. Bei der Authentifizierung handelt es sich um eine verhaltensbasierte Authentifizierung unter Verwendung von Bewegungsdaten des UWB-Tokens, welche durch Bewegungen des Nutzers hervorgerufen werden, der das UWB-Token mit sich führt. Beispielsweise umfasst das UWB-Token ein Band, mit welchem es um einen Hals oder ein Handgelenk des Nutzers befestigt ist. In Block 420 werden Bewegungsdaten des UWB-Tokens durch einen Bewegungssensor des UWB-Tokens erfasst. In Block 422 werden die erfassten Bewegungsdaten in ein Klassifikationsmodul des UWB-Tokens eingegeben, welches zum Erkennen eines oder mehrerer generischer Bewegungsmuster unter Verwendung von Bewegungsdaten konfiguriert bzw. trainiert ist. In Block 424 wird ein Klassifikationsergebnis durch das Klassifikationsmodul generiert, ob der Nutzer, der das UWB-Token trägt, ein in dem UWB-Token registrierte Nutzer ist. In Block 426 wird ein Authentifizierungssignal erzeugt, falls das Klassifikationsergebnis ein Prüfungskriterium erfüllt. Das Prüfkriterium umfasst beispielsweise ein Überschreiten eines Schwellenwerts für die Wahrscheinlichkeit, dass es sich bei dem Nutzer des UWB-Tokens um einen registrierten Nutzer handelt. Zur Bestimmung der Wahrscheinlichkeit sind beispielsweise Referenzwerte für Bewegungen des registrierten Nutzers in einem Speicher des UWB-Tokens gespeichert. Das Authentifizierungssignal signalisiert eine erfolgreiche Authentifizierung des Nutzers, der das UWB-Token trägt.

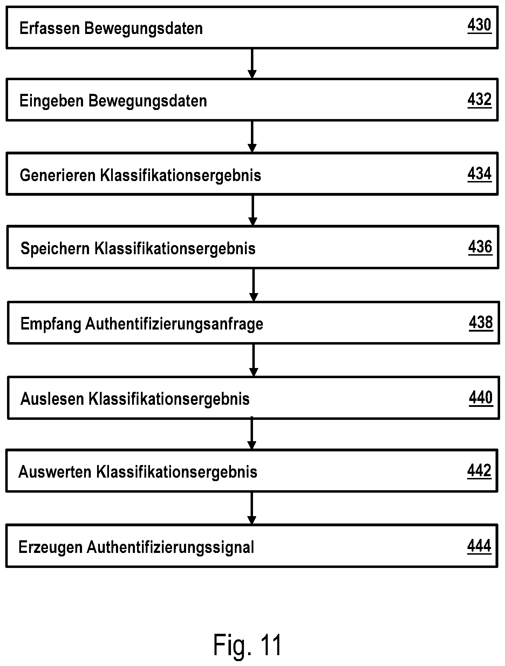

Figur 11 zeigt ein exemplarisches Verfahren zum Authentifizieren eines Nutzers eines UWB-Tokens. Die Schritte 430 bis 434 entsprechen den Schritten 420 bis 424 der Figur 10 und werden beispielsweise wiederholt nacheinander ausgeführt. Nach jeder Wiederholung wird in Schritt 436 das jeweils in Schritt 434 generierte Klassifikationsergebnis in einem Speicher des UWB-Tokens abgespeichert. In Block 438 wird eine Authentifizierungsanfrage empfangen. Diese Authentifizierungsanfrage kann beispielsweise von einem UWB-überwachungssystem empfangen werden. Auf den Empfang der Authentifizierungsanfrage hin, wird in Block 440 auf den Speicher des UWB-Tokens zum Auslesen eines gespeicherten Klassifikationsergebnisses zugegriffen und das Klassifikationsergebnis aus dem Speicher des UWB-Tokens ausgelesen. Beispielsweise wird das zuletzt gespeicherte Klassifikationsergebnis ausgelesen. In Block 442 wird das ausgelesene Klassifikationsergebnis unter Verwendung des Prüfungskriteriums ausgewertet und, falls das Klassifikationsergebnis ein Prüfungskriterium erfüllt, in Block 444 ein Authentifizierungssignal erzeugt.

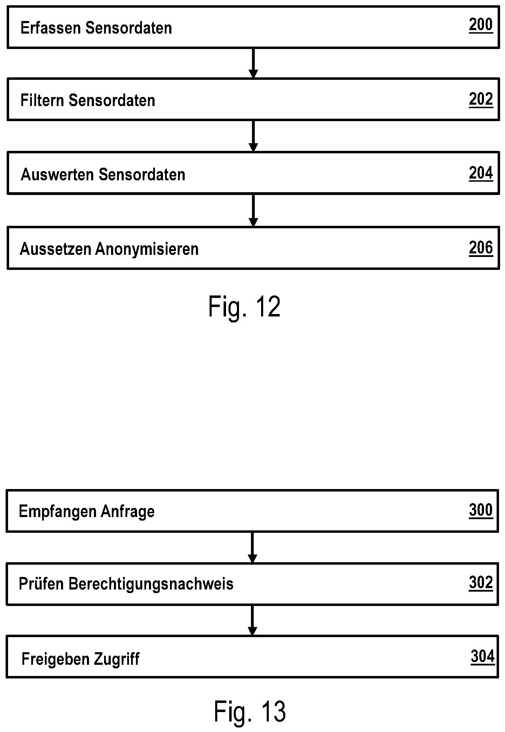

Figur 12 zeigt ein exemplarisches Verfahren zum Steuern eines UWB-Überwachungssystems. In Block 200 werden Sensordaten in einem räumlichen Bereich durch UWB-Sensoren des UWB-Überwachungssystems erfasst. Die erfassten Sensordaten können personenbezogene Sensordaten umfassen. In Block 202 werden die erfassten Sensordaten unter Verwendung von Anonymisierungsfiltern der UWB-Sensoren gefiltert. Dabei werden personenbezogene Sensordaten anonymisiert. Ein solches Anonymisieren umfasst beispielsweise ein Löschen oder Verschlüsseln der zu anonymisierenden Sensordaten. In Block 204 werden die erfassten und gefilterten Sensordaten zum Detektieren eines Ausnahmeereignisses ausgewertet. Dies erfolgt beispielsweise durch ein zentrales oder dezentrales Steuermodul des UWB-Überwachungssystems. In Block 206 wird auf ein Detektieren eines Ausnahmeereignisses hin, ein zeitlich begrenztes Aussetzen des Anonymisierens der personenbezogene Sensordaten beispielsweise durch das Steuermodul veranlasst.

Figur 13 zeigt ein exemplarisches Verfahren zum Steuern eines UWB-Überwachungssystems. In Block 300 empfängt das UWB-Überwachungssystem, beispielsweise ein Steuermodul des UWB-Überwachungssystems, eine Anfrage zum Freigeben von erfassten Sensordaten. In Block 302 wird, beispielsweise durch das Steuermodul, eine von der Anfrage umfasster Berechtigungsnachweis zum Zugriff auf die angefragte Sensordaten geprüft. Bei dem Berechtigungsnachweis kann es sich beispielsweise um ein Berechtigungszertifikat handeln oder um einen Identifikator eines hinterlegten Berechtigungsprofils des Anfragenden. In Block 304 wird auf eine erfolgreiche Prüfung des Berechtigungsnachweises hin, ein Zugriff auf die angefragten Sensordaten freigegeben. Beispielsweise werden die angefragten Sensordaten an den Anfragenden gesendet oder auf einer lokalen Anzeigevorrichtung des Überwachungssystems angezeigt.

### Bezugszeichenliste

- 100: UWB-Überwachungssystem
- 102: räumlicher Bereich
- 104: Zugang/Ausgang
- 106: räumlicher Abschnitt
- 108: Zugang/Ausgang
- 107: UWB-Lokalisierungssignal
- 110: UWB-Sensor
- 111: UWB-Transceiver
- 112: UWB-Token
- 114: UWB-Verbindung
- 115: LAN-Verbindung
- 116: Steuermodul
- 120: Prozessor
- 122: Sensorelement
- 123: Filter
- 124: Speicher
- 125: Referenzmuster
- 126: UWB-Antenne
- 130: Prozessor
- 132: Speicher
- 134: UWB-Antenne
- 136: Energiegewinnungsmodul
- 138: Authentifizierungsmodul
- 139: Authentifizierungssensor
- 140: Band
- 142: Antennenstrukturen
- 144: Antennenelemente
- 150: Nutzer
- 152 154 156 158: Pendelbewegung

## Patentansprüche

1. UWB-Token (112), welches eine UWB-Antenne (134) zum Senden und Empfangen von UWB-Signalen umfasst, wobei die UWB-Antenne (134) eine Mehrzahl von leitfähigen Antennenstrukturen (142) umfasst, wobei die Antennenstrukturen (142) eine geometrische Kodierung mit einem das UWB-Token (112) identifizierenden individuellen Resonanzmuster aufweisen, **dadurch gekennzeichnet, dass** das UWB-Token (112) ein Band (140) umfasst, welches zum Tragen des UWB-Tokens (112) konfiguriert ist, wobei die UWB-Antenne (134) zumindest teilweise in das Band (140) integriert ist und sich zumindest ein Teil der leitfähigen Antennenstrukturen (142) entlang des Bandes (140) erstreckt.

2. UWB-Token (112) nach Anspruch 1, wobei die leitfähigen Antennenstrukturen (142) streifenförmige und/oder flächige Antennenelemente (144) umfassen, und/oder
wobei die Antennenstrukturen (142) eine Mehrzahl von aufeinander abgestimmte Einzelantennen umfassen, welche eine Patch-Antenne bilden.

3. UWB-Token (112) nach einem der Ansprüche 1 bis 2, wobei das UWB-Token (112) ein Energiegewinnungsmodul (136) umfasst, welches zum Gewinnen von elektrischer Energie für einen Betrieb des UWB-Tokens (112) durch Umwandeln kinetischer Energie in elektrische Energie konfiguriert ist, wobei die umgewandelte kinetische Energie beispielsweise kinetische Energie von Pendelbewegung (152) des Bandes (140) beim Tragen des UWB-Tokens (112) umfasst.

4. UWB-Token (112) nach Anspruch 3, wobei das Energiegewinnungsmodul (136) zum Umwandeln der kinetischen Energie in die elektrische Energie unter Verwendung eines elektromagnetischen, piezoelektrischen und/oder elektrostatischen Verfahrens konfiguriert ist.

5. UWB-Token (112) nach einem der Ansprüche 1 bis 4, wobei das UWB-Token (112) einen Bewegungssensor (139) zum Erfassen von Bewegungsdaten des Bandes (140) beim Tragen des UWB-Tokens (112) durch den Nutzer (150) umfasst, wobei die Bewegungsdaten des Bandes (140) Daten der Pendelbewegungen (152) des Bandes (140) beim Tragen umfassen, wobei das UWB-Token (112) ferner ein Authentifizierungsmodul (138) zum verhaltensbasierten Authentifizieren des Nutzers (150), der das UWB-Token (112) trägt, unter Verwendung der erfassten Bewegungsdaten umfasst.

6. UWB-Token (112) nach Anspruch 5, wobei das Authentifizierungsmodul (138) ein Klassifikationsmodul umfasst, welches zum Erkennen eines oder mehrerer generischer Bewegungsmuster unter Verwendung von Bewegungsdaten konfiguriert ist, wobei das verhaltensbasierte Authentifizieren des Nutzers (150) durch das UWB-Token (112) die folgenden Schritte umfasst:
• Erfassen der Bewegungsdaten durch den Bewegungssensor (139) des UWB-Tokens (112),
• Eingeben der erfassten Bewegungsdaten in das Klassifikationsmodul,
• Generieren eines Klassifikationsergebnisses durch das Klassifikationsmodul, ob der Nutzer (150), der das UWB-Token (112) trägt, ein in dem UWB-Token (112) registrierte Nutzer ist,
• Erzeugen eines Authentifizierungssignals, falls das Klassifikationsergebnis ein Prüfungskriterium erfüllt, wobei das Authentifizierungssignal eine erfolgreiche Authentifizierung des Nutzers (150), der das UWB-Token (112) trägt, signalisiert.

7. UWB-Token (112) nach Anspruch 6, wobei das UWB-Token (112) dazu konfiguriert ist die Schritte des Erfassens der Bewegungsdaten, des Eingebens der Bewegungsdaten und des Generierens des Klassifikationsergebnisses wiederholt nacheinander auszuführen,
wobei das verhaltensbasierte Authentifizieren des Nutzers (150) durch das UWB-Token (112) ferner ein Speichern der jeweils generierten Klassifikationsergebnisse in einem Speicher des UWB-Tokens (112) umfasst,
wobei das Erzeugen des Authentifizierungssignals umfasst:
• auf eine Authentifizierungsanfrage hin, Zugreifen auf den Speicher des UWB-Tokens (112) zum Auslesen des gespeicherten Klassifikationsergebnisses,
• Auslesen des Klassifikationsergebnisses aus dem Speicher des UWB-Tokens (112),
• Auswerten des ausgelesenen Klassifikationsergebnisses unter Verwendung des Prüfungskriteriums.

8. UWB-Token (112) nach einem der Ansprüche 1 bis7, wobei das Band (140) ein Halteelement umfasst, welches zum Halten eines Gegenstands konfiguriert ist.

9. UWB-Token (112) nach Anspruch 1 bis 8, wobei es sich bei dem Band (140) um ein Umhängeband handelt, welches konfiguriert ist zum Tragen des UWB-Tokens (112) um einen Hals des Nutzers (150).

10. UWB-Überwachungssystem (100) zur Überwachung eines räumlichen Bereiches (102), wobei das UWB-Überwachungssystem (100) eine Mehrzahl von UWB-Sensoren (110) umfasst, welche in dem räumlichen Bereich (102) verteilt angeordnet und zum Erfassen von Sensordaten konfiguriert sind, wobei die UWB-Sensoren (110) für eine Kommunikation mittels UWB konfiguriert sind,
wobei die Mehrzahl von UWB-Sensoren (110) ein oder mehrere UWB-Identifizierungssensoren umfasst, welche konfiguriert sind zum Identifizieren zumindest eines UWB-Tokens (112) nach einem der Ansprüche 1 bis 9, wobei in einem Speicher (124) des UWB-Überwachungssystems (100) eine Mehrzahl von Referenzmustern (125) gespeichert ist, welche jeweils einem UWB-Token zugeordnet sind, wobei das Identifizieren umfasst:
• Erfassen von Sensordaten durch einen der Identifizierungssensoren in Form eines Empfangens eines von dem UWB-Token (112) gesendeten UWB-Signals, welches infolge einer geometrischen Kodierung von zum Senden verwendeten Antennenstrukturen (142) einer UWB-Antenne (134) ein das UWB-Token (112) identifizierendes individuelles Resonanzmuster aufweist,
• Bestimmen des individuellen Resonanzmusters,
• Vergleichen des bestimmten individuellen Resonanzmuster mit den Referenzmustern (125) der Mehrzahl von Referenzmustern (125),
• im Falle, dass eine Übereinstimmung zwischen dem bestimmten individuellen Resonanzmuster und einem der Referenzmuster einen vordefinierten Schwellenwert überschreitet, Identifizieren des dem entsprechenden Referenzmuster zugeordneten UWB-Tokens als das sendende UWB-Token (112).

11. UWB-Überwachungssystem (100) nach Anspruch 10, wobei das UWB-Überwachungssystem das zumindest eine UWB-Token (112) umfasst und/oder
wobei die Mehrzahl von UWB-Sensoren (110) eine Mehrzahl von UWB-Identifizierungssensoren umfasst, welche ferner konfiguriert sind zum Bestimmen von Positionsdaten des UWB-Tokens (112) innerhalb des räumlichen Bereiches (102), wobei das Bestimmen der Positionsdaten Laufzeitmessungen von UWB-Signalen (107) zwischen den UWB-Lokalisierungssensoren und den UWB-Token (112) umfasst.

12. UWB-Überwachungssystem (100) nach einem der Ansprüche 10 bis 11, wobei die von der Mehrzahl von UWB-Sensoren (110) erfassten Sensordaten personenbezogene Sensordaten umfassen und das UWB-Überwachungssystem (100) konfiguriert ist zum
• Erfassen von Sensordaten in dem räumlichen Bereich (102), welche personenbezogene Sensordaten umfassen,
• Filtern der erfassten Sensordaten unter Verwendung eines Anonymisierungsfilters (123), wobei der Anonymisierungsfilter dazu konfiguriert ist, die personenbezogenen Sensordaten zu anonymisieren,
• Auswerten der erfassten Sensordaten zum Detektieren eines Ausnahmeereignisses,
• auf das Detektieren des Ausnahmeereignisses hin, zeitlich begrenzten Aussetzen des Anonymisierens der personenbezogene Sensordaten.

13. UWB-Überwachungssystem (100) nach Anspruch 12, wobei das Ausnahmeereignis einen erfolglosen Versuch eines Identifizierens des UWB-Tokens (112) umfasst.

14. UWB-Überwachungssystem (100) nach einem der Ansprüche 12 bis 13, wobei das Anonymisieren durch den Anonymisierungsfilter (123) ein Verschlüsseln zumindest eines Teils der personenbezogenen Sensordaten umfasst, wobei das zeitlich begrenzte Aussetzen des Anonymisierens ein zeitlich begrenztes Bereitstellen der entsprechenden personenbezogenen Sensordaten in unverschlüsselter Form umfasst und/oder
wobei das UWB-Überwachungssystem (100) ferner konfiguriert ist zum
• Empfangen einer Anfrage zum Freigeben von erfassten Sensordaten,
• Prüfen eines von der Anfrage umfassten Berechtigungsnachweises zum Zugriff auf die angefragte Sensordaten,
• auf eine erfolgreiche Prüfung des Berechtigungsnachweises hin, Freigeben des Zugriffs auf die angefragten Sensordaten.

15. Verfahren zum Steuern eines UWB-Überwachungssystems (100) zur Überwachung eines räumlichen Bereiches (102), wobei das UWB-Überwachungssystem (100) eine Mehrzahl von UWB-Sensoren (110) umfasst, welche in dem räumlichen Bereich (102) verteilt angeordnet und zum Erfassen von Sensordaten konfiguriert sind, wobei die UWB-Sensoren (110) für eine Kommunikation mittels UWB konfiguriert sind,
wobei die Mehrzahl von UWB-Sensoren (110) ein oder mehrere UWB-Identifizierungssensoren umfasst, welche konfiguriert sind zum Identifizieren zumindest eines UWB-Tokens (112) nach einem der Ansprüche 1 bis 9, wobei in einem Speicher des UWB-Überwachungssystems (100) eine Mehrzahl von Referenzmustern (125) gespeichert ist, welche jeweils einem UWB-Token (112) zugeordnet sind, wobei das Verfahren zum Identifizieren des UWB-Tokens (112) umfasst:
• Erfassen von Sensordaten durch einen der Identifizierungssensoren in Form eines Empfangens eines von dem UWB-Token (112) gesendeten UWB-Signals, welches infolge einer geometrischen Kodierung von zum Senden verwendeten Antennenstrukturen (142) einer UWB-Antenne (134) ein das UWB-Token identifizierendes individuelles Resonanzmuster aufweist,
• Bestimmen des individuellen Resonanzmusters,
• Vergleichen des bestimmten individuellen Resonanzmuster mit den Referenzmustern (125) der Mehrzahl von Referenzmustern (125),
• im Falle, dass eine Übereinstimmung zwischen dem bestimmten individuellen Resonanzmuster und einem der Referenzmuster einen vordefinierten Schwellenwert überschreitet, Identifizieren des dem entsprechenden Referenzmuster zugeordneten UWB-Tokens als das sendende UWB-Token.

## Claims

1. A UWB token (112) which comprises a UWB antenna (134) for transmitting and receiving UWB signals, wherein the UWB antenna (134) comprises a plurality of conductive antenna structures (142), wherein the antenna structures (142) have a geometric coding with an individual resonance pattern identifying the UWB token (112), **characterised in that** the UWB token (112) comprises a band (140), which is configured to support the UWB token (112), wherein the UWB antenna (134) is integrated at least partially into the band (140) and extends at least a part of the conductive antenna structures (142) along the band (140).

2. The UWB token (112) according to claim 1, wherein the conductive antenna structures (142) comprise strip-shaped and/or flat antenna elements (144), and/or
wherein the antenna structures (142) comprise a plurality of mutually coordinated individual antennas which form a patch antenna.

3. The UWB token (112) according to any one of claims 1 to 2, wherein the UWB token (112) comprises an energy recovery module (136) which is configured to recover electrical energy for operation of the UWB token (112) by conversion of kinetic energy into electrical energy, wherein the converted kinetic energy for example comprises kinetic energy from oscillating motion (152) of the band (140) when the UWB token (112) is worn.

4. The UWB token (112) according to claim 3, wherein the energy recovery module (136) is configured to convert the kinetic energy into the electrical energy with use of an electromagnetic, piezoelectric and/or electrostatic method.

5. The UWB token (112) according to any one of claims 1 to 4, wherein the UWB token (112) comprises a motion sensor (139) for detecting motion data of the band (140) when the UWB token (112) is worn by the user (150), wherein the motion data of the band (140) comprise data of the oscillating movements (152) of the band (140) whilst being worn, wherein the UWB token (112) further comprises an authentication module (138) for behaviour-based authentication of the user (150), who is wearing the UWB token (112), with use of the detected motion data.

6. The UWB token (112) according to claim 5, wherein the authentication module (138) comprises a classification module, which is configured to identify one or more generic movement patterns using motion data, wherein the behaviour-based authentication of the user (150) by the UWB token (112) comprises the following steps:
• detecting the motion data by the motion sensor (139) of the UWB token (112),
• inputting the detected motion data into the classification module,
• generating a classification result by the classification module as to whether the user (150) who is wearing the UWB token (112) is a user registered in the UWB token (112),
• producing an authentication signal if the classification result satisfies a verification criterion, wherein the authentication signal signals successful authentication of the user (150) who is wearing the UWB token (112).

7. The UWB token (112) according to claim 6, wherein the UWB token (112) is configured to carry out repeatedly, one after the other, the steps of detecting the motion data, inputting the motion data and generating the classification result,
wherein the behaviour-based authentication of the user (150) by the UWB token (112) further comprises a storing of the generated classification result in a memory of the UWB token (112),
wherein the generation of the authentication signal comprises:
• in response to an authentication request, accessing the memory of the UWB token (112) to read out the stored classification result,
• reading out the classification result from the memory of the UWB token (112),
• evaluating the read-out classification result with use of the verification criterion.

8. The UWB token (112) according to any one of claims 1 to 7, wherein the band (140) comprises a holding element which is configured to hold an object.

9. The UWB token (112) according to claim 1 to 8, wherein the band (140) is a lanyard which is configured such that the UWB token (112) may be worn around the neck of the user (150).

10. A UWB monitoring system (100) for monitoring a spatial area (102), wherein the UWB monitoring system (100) comprises a plurality of UWB sensors (110), which are arranged distributed in the spatial area (102) and are configured for the detection of sensor data, wherein the UWB sensors (110) are configured for communication by means of UWB,
wherein the plurality of UWB sensors (110) comprises one or more UWB identification sensors which are configured to identify at least one UWB token (112) according to any one of claims 1 to 9, wherein a plurality of reference patterns (125) is stored in a memory (124) of the UWB monitoring system (100) and each of said patterns is associated with a UWB token, wherein the identification comprises:
• detecting sensor data by one of the identification sensors in the form of the receiving of a UWB signal transmitted by the UWB token (112), which UWB signal comprises an individual resonance pattern identifying the UWB token (112) as the result of a geometric coding of antenna structures (142) of a UWB antenna (134) used for the transmission,
• determining the individual resonance pattern,
• comparing the determined individual resonance pattern with the reference patterns (125) of the plurality of reference patterns (125),
• in the event that the concordance between the determined individual resonance patterns and one of the reference patterns exceeds a predefined threshold value, identifying the UWB token associated with the corresponding reference pattern as the transmitting UWB token (112).

11. The UWB monitoring system (100) according to claim 10, wherein the UWB monitoring system comprises the at least one UWB token (112) and/or
wherein the plurality of UWB sensors (110) comprises a plurality of UWB identification sensors, which are further configured to determine position data of the UWB token (112) within the spatial area (102), wherein the determination of the position data comprises runtime measurements of UWB signals (107) between the UWB localisation sensors and the UWB token (112).

12. The UWB monitoring system (100) according to any one of claims 10 to 11, wherein the sensor data detected by the plurality of UWB sensors (110) comprise personal sensor data and the UWB monitoring system (100) is configured to
• detect sensor data in the spatial area (102), said data comprising personal sensor data,
• filter the detected sensor data using an anonymising filter (123), wherein the anonymising filter is configured to anonymise the personal sensor data,
• evaluate the detected sensor data to detect an exceptional event,
• in response to the detection of the exceptional event, suspend the anonymisation of the personal sensor data in a time-limited manner.

13. The UWB monitoring system (100) according to claim 12, wherein the exceptional event comprises a failed attempt to identify the UWB token (112).

14. The UWB monitoring system (100) according to any one of claims 12 to 13, wherein the anonymisation by the anonymising filter (123) comprises an encryption of at least some of the personal sensor data, wherein the time-limited suspension of the anonymisation comprises a time-limited provision of the corresponding personal sensor data in unencrypted form and/or
wherein the UWB monitoring system (100) is further configured to
• receive a request to release detected sensor data,
• verify a proof of authorisation, included by the request, for access to the requested sensor data,
• in response to a successful verification of the proof of authorisation, grant access to the requested sensor data.

15. A method for controlling a UWB monitoring system (100) for monitoring a spatial area (102), wherein the UWB monitoring system (100) comprises a plurality of UWB sensors (110) which are arranged distributed in the spatial area (102) and are configured to detect sensor data, wherein the UWB sensors (110) are configured for communication by means of UWB,
wherein the plurality of UWB sensors (110) comprises one or more UWB identification sensors which are configured to identify at least one UWB token (112) according to any one of claims 1 to 9, wherein a plurality of reference patterns (125) is stored in a memory of the UWB monitoring system (100) and each of said reference patterns is associated with a UWB token (112), wherein the method for identifying the UWB token (112) comprises:
• detecting sensor data by one of the identification sensors in the form of the receiving of a UWB signal transmitted by the UWB token (112), which UWB signal comprises an individual resonance pattern identifying the UWB token as the result of a geometric coding of antenna structures (142) of a UWB antenna (134) used for the transmission,
• determining the individual resonance pattern,
• comparing the determined individual resonance pattern with the reference patterns (125) of the plurality of reference patterns (125),
• in the event that the concordance between the determined individual resonance patterns and one of the reference patterns exceeds a predefined threshold value, identifying the UWB token associated with the corresponding reference pattern as the transmitting UWB token (112).

## Revendications

1. Jeton UWB (112) qui comprend une antenne UWB (134) destinée à transmettre et recevoir des signaux UWB, dans lequel l'antenne UWB (134) comprend une pluralité de structures d'antenne conductrices (142), dans lequel les structures d'antenne (142) ont un codage géométrique avec un motif de résonance individuel identifiant le jeton UWB (112), **caractérisé en ce que** le jeton UWB (112) comprend une bande (140), qui est conçue pour soutenir le jeton UWB (112), dans lequel l'antenne UWB (134) est intégrée au moins partiellement dans la bande (140) et étend au moins une partie des structures d'antenne conductrices (142) le long de la bande (140).

2. Jeton UWB (112) selon la revendication 1, dans lequel les structures d'antenne conductrices (142) comprennent des éléments d'antenne en forme de bandelette et/ou plats (144), et/ou
dans lequel les structures d'antenne (142) comprennent une pluralité d'antennes individuelles mutuellement coordonnées qui forment une antenne planaire.

3. Jeton UWB (112) selon l'une quelconque des revendications 1 à 2, dans lequel le jeton UWB (112) comprend un module de récupération d'énergie (136) qui est configuré pour récupérer de l'énergie électrique pour le fonctionnement du jeton UWB (112) par conversion de l'énergie cinétique en énergie électrique, dans lequel l'énergie cinétique convertie comprend par exemple l'énergie cinétique d'un mouvement d'oscillation (152) de la bande (140) lorsque le jeton UWB (112) est porté.

4. Jeton UWB (112) selon la revendication 3, dans lequel le module de récupération d'énergie (136) est configuré pour convertir l'énergie cinétique dans l'énergie électrique par utilisation d'une méthode électromagnétique, piézoélectrique et/ou électrostatique.

5. Jeton UWB (112) selon l'une quelconque des revendications 1 à 4, dans lequel le jeton UWB (112) comprend un capteur de mouvement (139) destiné à détecter les données de mouvement de la bande (140) lorsque le jeton UWB (112) est porté par l'utilisateur (150), dans lequel les données de mouvement de la bande (140) comprennent des données des mouvements d'oscillation (152) de la bande (140) alors qu'elle est portée, dans lequel le jeton UWB (112) comprend en outre un module d'authentification (138) pour l'authentification basée sur le comportement de l'utilisateur (150), qui porte le jeton UWB (112), avec utilisation des données de mouvement détectées.

6. Jeton UWB (112) selon la revendication 5, dans lequel le module d'authentification (138) comprend un module de classification, qui est configuré pour identifier un ou plusieurs motifs de mouvement génériques en utilisant les données de mouvement, dans lequel l'authentification basée sur le comportement de l'utilisateur (150) par le jeton UWB (112) comprend les étapes suivantes consistant à :
• détecter les données de mouvement par l'intermédiaire du capteur de mouvement (139) du jeton UWB (112),
• introduire les données de mouvements détectées dans le module de classification,
• générer un résultat de classification par l'intermédiaire du module de classification déterminant si l'utilisateur (150) qui porte le jeton UWB (112) est un utilisateur enregistré dans le jeton UWB (112),
• produire un signal d'authentification si le résultat de classification satisfait à un critère de vérification, dans lequel le signal d'authentification signale une authentification réussie de l'utilisateur (150) qui porte le jeton UWB (112).

7. Jeton UWB (112) selon la revendication 6, dans lequel le jeton UWB (112) est configuré pour mettre en œuvre de manière répétée, l'une après l'autre, les étapes consistant à détecter les données de mouvement, introduire les données de mouvement et générer le résultat de classification,
dans lequel l'authentification basée sur le comportement de l'utilisateur (150) par le jeton UWB (112) comprend en outre un stockage du résultat de classification généré dans une mémoire du jeton UWB (112),
dans lequel la génération du signal comprend les étapes consistant à :
• en réponse à une requête d'authentification, accéder à la mémoire du jeton UWB (112) pour lire le résultat de classification stocké,
• lire le résultat de classification dans la mémoire du jeton UWB (112),
• évaluer le résultat de classification lu avec utilisation du critère de vérification.

8. Jeton UWB (112) selon l'une quelconque des revendications 1 à 7, dans lequel la bande (140) comprend un élément de maintien qui est configuré pour maintenir un objet.

9. Jeton UWB (112) selon la revendication 1 à 8, dans lequel la bande (140) est une lanière qui est conçue de telle sorte que le jeton UWB (112) peut être porté autour du cou de l'utilisateur (150).

10. Système de surveillance UWB (100) destiné à surveiller une zone d'espace (102), dans lequel le système de surveillance UWB (100) comprend une pluralité de capteurs UWB (110), qui sont agencés de manière distribuée dans la zone d'espace (102) et sont configurés pour la détection de données de capteurs, dans lequel les capteurs UWB (110) sont configurés pour une communication au moyen d'UWB,
dans lequel la pluralité de capteurs UWB (110) comprend un ou plusieurs capteurs d'identification UWB qui sont configurés pour identifier au moins un jeton UWB (112) selon l'une quelconque des revendications 1 à 9, dans lequel une pluralité de motifs de référence (125) sont stockés dans une mémoire (124) du système de surveillance UWB (100) et chacun desdits motifs est associé à un jeton UWB, dans lequel l'identification comprend les étapes consistant à :
• détecter des données de capteurs par l'intermédiaire de l'un des capteurs d'identification sous forme de la réception d'un signal UWB transmis par le jeton UWB (112), lequel signal UWB comprend un motif de résonance individuel identifiant le jeton UWB (112) en tant que résultat d'un codage géométrique de structures d'antenne (142) d'une antenne UWB (134) utilisée pour la transmission,
• déterminer le motif de résonance individuel,
• comparer le motif de résonance individuel déterminé avec les motifs de référence (125) de la pluralité de motifs de référence (125),
• dans le cas où la concordance entre les motifs de résonance individuelle déterminés et un des motifs de référence dépasse une valeur seuil prédéfinie, identifier le jeton UWB associé au motif de référence correspondant en tant que jeton UWB (112) de transmission.

11. Système de surveillance UWB (100) selon la revendication 10, dans lequel le système de surveillance UWB comprend l'au moins un jeton UWB (112) et/ou
dans lequel la pluralité de capteurs UWB (110) comprend une pluralité de capteurs d'identification UWB, qui sont en outre configurés pour déterminer les données de position du jeton UWB (112) à l'intérieur de la zone spatiale (102), dans lequel la détermination des données de position comprend des mesures de durée d'exécution des signaux UWB (107) entre les capteurs de localisation UWB et le jeton UWB (112).

12. Système de surveillance UWB (100) selon l'une quelconque des revendications 10 à 11, dans lequel les données de capteurs détectées par la pluralité de capteurs UWB (110) comprennent des données de capteurs personnels et le système de surveillance UWB (100) est configuré pour
• détecter des données de capteurs dans la zone d'espace (102), lesdites données comprenant des données de capteurs personnels,
• filtrer les données de capteurs détectées en utilisant un filtre d'anonymisation (123), dans lequel le filtre d'anonymisation est configuré pour anonymiser les données de capteurs personnels,
• évaluer les données de capteurs détectées pour détecter un événement exceptionnel,
• en réponse à la détection de l'événement exceptionnel, suspendre l'anonymisation des données de capteurs personnels d'une manière limitée dans le temps.

13. Système de surveillance UWB (100) selon la revendication 12, dans lequel l'événement exceptionnel comprend une tentative échouée pour identifier le jeton UWB (112).

14. Système de surveillance UWB (100) selon l'une quelconque des revendications 12 à 13, dans lequel l'anonymisation par le filtre d'anonymisation (123) comprend un chiffrage d'au moins certaines des données de capteurs personnels, dans lequel la suspension limitée dans le temps de l'anonymisation comprend une fourniture limitée dans le temps des données de capteurs personnels correspondantes sous forme non chiffrée et/ou
dans lequel le système de surveillance UWB (100) est en outre configuré pour
• recevoir une requête pour libérer les données de capteurs détectées,
• vérifier une preuve d'autorisation, incluse dans la requête, pour accéder aux données de capteurs requises,
• en réponse à une vérification réussie de la preuve d'autorisation, accorder l'accès aux données de capteurs requises.

15. Méthode de commande d'un système de surveillance UWB (100) destiné à surveiller une zone d'espace (102), dans laquelle le système de surveillance UWB (100) comprend une pluralité de capteurs UWB (110), qui sont agencés de manière distribuée dans la zone d'espace (102) et sont configurés pour détecter des données de capteurs, dans laquelle les capteurs UWB (110) sont configurés pour une communication au moyen d'UWB,
dans laquelle la pluralité de capteurs UWB (110) comprend un ou plusieurs capteurs d'identification UWB qui sont configurés pour identifier au moins un jeton UWB (112) selon l'une quelconque des revendications 1 à 9, dans lequel une pluralité de motifs de référence (125) sont stockés dans une mémoire du système de surveillance UWB (100) et chacun desdits motifs de référence est associé à un jeton UWB (112), dans laquelle la méthode d'identification du jeton UWB (112) comprend les étapes consistant à :
• détecter des données de capteurs par l'intermédiaire de l'un des capteurs d'identification sous forme de la réception d'un signal UWB transmis par le jeton UWB (112), lequel signal UWB comprend un motif de résonance individuel identifiant le jeton UWB en tant que résultat d'un codage géométrique de structures d'antenne (142) d'une antenne UWB (134) utilisée pour la transmission,
• déterminer le motif de résonance individuel,
• comparer le motif de résonance individuel déterminé avec les motifs de référence (125) de la pluralité de motifs de référence (125),
• dans le cas où la concordance entre les motifs de résonance individuelle déterminés et un des motifs de référence dépasse une valeur seuil prédéfinie, identifier le jeton UWB associé au motif de référence correspondant en tant que jeton UWB (112) de transmission.
